# EUROPEAN PATENT APPLICATION

(11) **EP 4 266 774 A1**
(43) Date of publication of application: **25.10.2023**
(21) Application number: 22739189.3
(22) Date of filing: 18.01.2022
(51) Int. Cl.: H04W 68/02, H04W 88/06, H04W 8/20

(54) **INFORMATION PROCESSING METHOD AND APPARATUS, DEVICE, AND READABLE STORAGE MEDIUM**

(30) Priority: 18.01.2021 CN 202110063688
(71) Applicant: Vivo Mobile Communication Co., Ltd., Dongguan, Guangdong 523863 (CN)
(72) Inventor: KE, Xiaowan, Dongguan, Guangdong 523863 (CN)
(74) Representative: Murgitroyd & Company
(86) International application number: PCT/CN2022/072539
(87) International publication number: WO 2022/152314

(57) **Abstract**

This application discloses an information processing method and apparatus, a device, and a readable storage medium. The method includes: obtaining first information, where the first information includes at least one of the following: a message for paging a terminal, terminal capability information, network capability information, and first indication information; and performing a first operation based on the first information.

## Description

### CROSS-REFERENCE TO RELATED APPLICATION

This application claims priority to Chinese Patent Application No. 202110063688.8, filed on January 18, 2021 in China, which is incorporated herein by reference in its entirety.

### TECHNICAL FIELD

This application pertains to the field of communication technologies, and in particular, relates to an information processing method and apparatus, a device, and a readable storage medium.

### BACKGROUND

Multi-card terminal optimization involves a variety of characteristics. Problems of how to indicate capabilities of the related characteristics, how to trigger functions of the related characteristics, and how to understand values of the functions of the related characteristics still need to be resolved.

### SUMMARY

Embodiments of this application provide an information processing method and apparatus, a device, and a readable storage medium to resolve a problem of obtaining a terminal capability and a network capability.

According to a first aspect, an information processing method is provided. The method is performed by a first communication device and includes:
obtaining first information, where the first information includes at least one of the following: a message for paging a terminal, terminal capability information, network capability information, and first indication information; and
performing a first operation based on the first information, where
the first operation includes at least one of the following:
   determining a paging cause;
   determining to request to avoid a paging collision or to request mobile registration;
   sending an indication indicating refusal to accept paging; and
   presenting, through a man-machine interface, a supported paging cause value indicated by the first indication information, and a paging cause value supported by a terminal and/or a network, where
   the first indication information is used to indicate at least one of the following: indication information related to a paging cause, indication information related to an indication indicating refusal to accept paging, indication information related to avoidance of a paging collision, indication information related to a first leaving mode, and indication information related to a multi-card enhancement function;
   the network capability information includes at least one of the following: network capability information related to a paging cause, network capability information related to an indication indicating refusal to accept paging, network capability information related to avoidance of a paging collision, network capability information of a first leaving mode, and network capability information of a multi-card enhancement function; and
   the terminal capability information includes at least one of the following: terminal capability information related to a paging cause, terminal capability information related to an indication indicating refusal to accept paging, terminal capability information related to avoidance of a paging collision, terminal capability information of a first leaving mode, and terminal capability information of a multi-card enhancement function.

According to a second aspect, an information processing method is provided. The method is performed by a second communication device and includes:
obtaining second information, where the second information includes at least one of the following: terminal capability information and/or network capability information; and
performing a second operation based on the second information, where the second operation includes at least one of the following:
   sending a paging cause or not sending a paging cause;
   determining a paging cause value;
   determining first indication information;
   sending a paging cause via a non-3GPP access node or sending a paging cause via a notification message;
   sending a paging cause and/or a first message via a 3GPP access node, and receiving an indication indicating refusal to accept paging via a non-3GPP node;
   sending a paging cause and/or a first message via a non-3GPP access node, and receiving an indication indicating refusal to accept paging via a non-3GPP node; and
   sending a paging cause and/or a first message via a non-3GPP access node, and receiving an indication indicating refusal to accept paging via a 3GPP node;
   where the first indication information is used to indicate at least one of the following: indication information related to a paging cause, indication information related to an indication indicating refusal to accept paging, indication information related to avoidance of a paging collision, indication information related to a first leaving mode, and indication information related to a multi-card enhancement function;
   the terminal capability information includes at least one of the following: terminal capability information related to a paging cause, terminal capability information related to an indication indicating refusal to accept paging, terminal capability information related to avoidance of a paging collision, terminal capability information of a first leaving mode, and terminal capability information of a multi-card enhancement function;
   the network capability information includes at least one of the following: network capability information related to a paging cause, network capability information related to an indication indicating refusal to accept paging, network capability information related to avoidance of a paging collision, network capability information of a first leaving mode, and network capability information of a multi-card enhancement function; and
   the first message includes a message for paging a terminal.

According to a third aspect, an information processing method is provided. The method is performed by a third communication device and includes:
sending terminal capability information, where the terminal capability information includes at least one of the following: terminal capability information related to a paging cause, terminal capability information related to an indication indicating refusal to accept paging, terminal capability information related to avoidance of a paging collision, terminal capability information of a first leaving mode, and terminal capability information of a multi-card enhancement function.

According to a fourth aspect, an information processing method is provided. The method is performed by a fourth communication device and includes:
sending network capability information and/or first indication information, where
the first indication information is used to indicate at least one of the following: indication information related to a paging cause, indication information related to an indication indicating refusal to accept paging, indication information related to avoidance of a paging collision, indication information related to a first leaving mode, and indication information related to a multi-card enhancement function; and
the network capability information includes at least one of the following: network capability information related to a paging cause, network capability information related to an indication indicating refusal to accept paging, network capability information related to avoidance of a paging collision, network capability information of a first leaving mode, and network capability information of a multi-card enhancement function.

According to a fifth aspect, an information processing method is provided. The method is performed by a fifth communication device and includes:
obtaining fifth information, where the fifth information includes at least one of the following: indication information for indicating to send a paging cause, first indication information, and indication information for indicating that a terminal is in a multi-card mode; and
performing a fifth operation based on the fifth information, where
the fifth operation includes at least one of the following:
   determining a paging cause; and
   sending a paging cause.

According to a sixth aspect, an information processing apparatus is provided, including:
a first obtaining module, configured to obtain first information, where the first information includes at least one of the following: a message for paging a terminal, terminal capability information, network capability information, and first indication information; and
a first execution module, configured to perform a first operation based on the first information, where
the first operation includes at least one of the following:
   determining a paging cause;
   determining to request to avoid a paging collision or to request mobile registration;
   sending an indication indicating refusal to accept paging; and
   the first operation includes at least one of the following:
      determining a paging cause;
      determining to request to avoid a paging collision or to request mobile registration;
      sending an indication indicating refusal to accept paging; and
      presenting, through a man-machine interface, a supported paging cause value indicated by the first indication information, and a paging cause value supported by a terminal and/or a network, where
      the first indication information is used to indicate at least one of the following: indication information related to a paging cause, indication information related to an indication indicating refusal to accept paging, indication information related to avoidance of a paging collision, indication information related to a first leaving mode, and indication information related to a multi-card enhancement function;
      the network capability information includes at least one of the following: network capability information related to a paging cause, network capability information related to an indication indicating refusal to accept paging, network capability information related to avoidance of a paging collision, network capability information of a first leaving mode, and network capability information of a multi-card enhancement function; and
      the terminal capability information includes at least one of the following: terminal capability information related to a paging cause, terminal capability information related to an indication indicating refusal to accept paging, terminal capability information related to avoidance of a paging collision, terminal capability information of a first leaving mode, and terminal capability information of a multi-card enhancement function.

According to a seventh aspect, an information processing apparatus is provided, including:
a second obtaining module, configured to obtain second information, where the second information includes at least one of the following: terminal capability information and/or network capability information; and
a second execution module, configured to perform a second operation based on the second information, where
the second operation includes at least one of the following:
   sending a paging cause or not sending a paging cause;
   determining a paging cause value;
   determining first indication information;
   sending a paging cause via a non-3GPP access node or sending a paging cause via a notification message;
   sending a paging cause and/or a first message via a 3GPP access node, and receiving an indication indicating refusal to accept paging via a non-3GPP node;
   sending a paging cause and/or a first message via a non-3GPP access node, and receiving an indication indicating refusal to accept paging via a non-3GPP node; and
   sending a paging cause and/or a first message via a non-3GPP access node, and receiving an indication indicating refusal to accept paging via a 3GPP node;
   where the first indication information is used to indicate at least one of the following: indication information related to a paging cause, indication information related to an indication indicating refusal to accept paging, indication information related to avoidance of a paging collision, indication information related to a first leaving mode, and indication information related to a multi-card enhancement function;
   the terminal capability information includes at least one of the following: terminal capability information related to a paging cause, terminal capability information related to an indication indicating refusal to accept paging, terminal capability information related to avoidance of a paging collision, terminal capability information of a first leaving mode, and terminal capability information of a multi-card enhancement function;
   the network capability information includes at least one of the following: network capability information related to a paging cause, network capability information related to an indication indicating refusal to accept paging, network capability information related to avoidance of a paging collision, network capability information of a first leaving mode, and network capability information of a multi-card enhancement function; and
   the first message includes a message for paging a terminal.

According to an eighth aspect, an information processing apparatus is provided, including:
a second sending module, configured to send terminal capability information, where the terminal capability information includes at least one of the following: terminal capability information related to a paging cause, terminal capability information related to an indication indicating refusal to accept paging, terminal capability information related to avoidance of a paging collision, terminal capability information of a first leaving mode, and terminal capability information of a multi-card enhancement function.

According to a ninth aspect, an information processing apparatus is provided, including:
a third sending module, configured to send network capability information and/or first indication information, where
the first indication information is used to indicate at least one of the following: indication information related to a paging cause, indication information related to an indication indicating refusal to accept paging, indication information related to avoidance of a paging collision, indication information related to a first leaving mode, and indication information related to a multi-card enhancement function; and
the network capability information includes at least one of the following: network capability information related to a paging cause, network capability information related to an indication indicating refusal to accept paging, network capability information related to avoidance of a paging collision, network capability information of a first leaving mode, and network capability information of a multi-card enhancement function.

According to a tenth aspect, an information processing apparatus is provided, including:
a fourth obtaining module, configured to obtain fifth information, where the fifth information includes at least one of the following: indication information for indicating to send a paging cause, first indication information, and indication information for indicating that a terminal is in a multi-card mode; and
a third execution module, configured to perform a fifth operation based on the fifth information, where
the fifth operation includes at least one of the following:
   determining a paging cause; and
   sending a paging cause.

According to an eleventh aspect, a terminal is provided, including a processor, a memory, and a program or an instruction stored in the memory and executable on the processor, where when the program is executed by the processor, the steps of the foregoing method are implemented.

According to a twelfth aspect, a network side device is provided, including a processor, a memory, and a program or an instruction stored in the memory and executable on the processor, where when the program is executed by the processor, the steps of the foregoing method are implemented.

According to a thirteenth aspect, a readable storage medium is provided. The readable storage medium stores a program or an instruction, and when the program or the instruction is executed by a processor, the steps of the foregoing method are implemented.

According to a fourteenth aspect, a computer program product is provided. The computer program product is stored in a non-transient storage medium, and the computer program product is executed by at least one processor to implement the foregoing method.

According to a fifteenth aspect, a chip is provided. The chip includes a processor and a communication interface, the communication interface is coupled to the processor, and the processor is configured to execute a program or an instruction to implement the foregoing method.

In an optional embodiment of this application, flexible deployment of a multi-card terminal, determination of a paging occasion avoidance mode, and determination of a paging cause sending mode are supported, thereby improving reliability of a communication system.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may derive other drawings from these accompanying drawings without creative efforts.
FIG. 1 is a schematic diagram of a wireless communication system to which an embodiment of this application is applicable;
FIG. 2 is a first flowchart of an information processing method according to an embodiment of this application;
FIG. 3 is a second flowchart of an information processing method according to an embodiment of this application;
FIG. 4 is a third flowchart of an information processing method according to an embodiment of this application;
FIG. 5 is a fourth flowchart of an information processing method according to an embodiment of this application;
FIG. 6 is a first interaction flowchart of an information processing method according to an embodiment of this application;
FIG. 7 is a second interaction flowchart of an information processing method according to an embodiment of this application;
FIG. 8 is a first schematic diagram of an information processing apparatus according to an embodiment of this application;
FIG. 9 is a second schematic diagram of an information processing apparatus according to an embodiment of this application;
FIG. 10 is a third schematic diagram of an information processing apparatus according to an embodiment of this application;
FIG. 11 is a fourth schematic diagram of an information processing apparatus according to an embodiment of this application;
FIG. 12 is a schematic diagram of a terminal according to an embodiment of this application;
FIG. 13 is a schematic diagram of a network side device according to an embodiment of this application;
FIG. 14 is a fifth flowchart of an information processing method according to an embodiment of this application; and
FIG. 15 is a fifth schematic diagram of an information processing apparatus according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

In the specification and claims of this application, the terms "first", "second", and the like are intended to distinguish between similar objects but do not describe a specific order or sequence. It should be understood that, the terms used in such a way are interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. However, the following descriptions describe a new radio (New Radio, NR) system for example purposes, and NR terms are used in most of the following descriptions, although these technologies can also be applied to an application other than an NR system application, for example, a 6^{th} generation (6^{th} Generation, 6G) communication system.

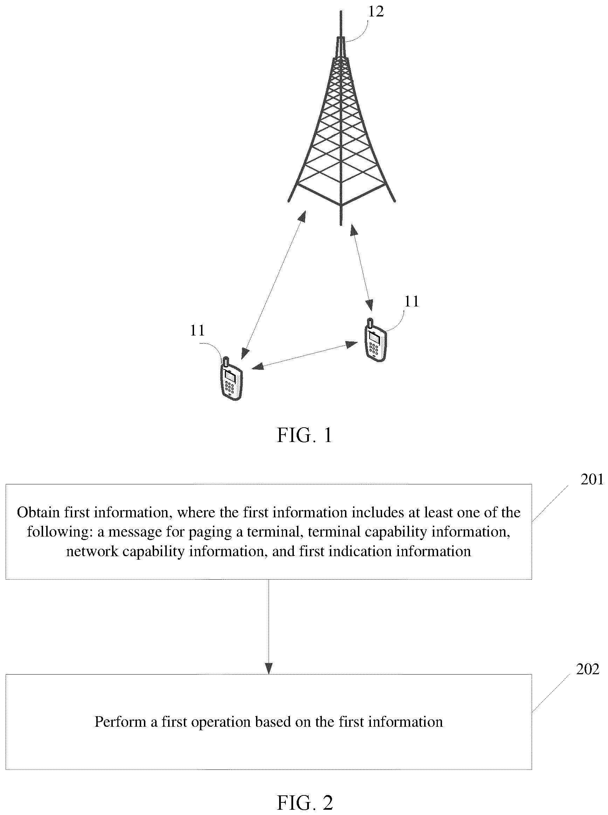

FIG. 1 is a block diagram of a wireless communication system to which an embodiment of this application is applicable. The wireless communication system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-Mobile Personal Computer, UMPC), a mobile internet device (Mobile Internet Device, MID), a wearable device (Wearable Device), vehicle user equipment (VUE), or pedestrian user equipment (PUE). The wearable device includes a bracelet, a headset, glasses, and the like. It should be noted that a specific type of the terminal 11 is not limited in the embodiments of this application. The network side device 12 may be a base station or a core network side device. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. As long as a same technical effect is achieved, the base station is not limited to a specified technical term. It should be noted that, in an optional embodiment of this application, only a base station in an NR system is used as an example, but a specific type of the base station is not limited.

Multi-card terminal optimization involves a plurality of functions, such as a paging cause, paging acceptance refusal, avoidance of a paging collision, and requesting to leave a network by a terminal. However, the following problems need to be resolved.

Problem 1: A problem of how to flexibly deploy these characteristics and indicate these characteristics to a terminal and a network has not been resolved.

One way of resolving this problem is to split functions for capability indication, or a multi-card enhancement function is used to indicate basic capabilities (for example, a paging cause and requesting to leave a network by a terminal), and additional capabilities (for example, avoiding a paging collision) are indicated by using other indications.

Problem 2: Backward compatibility of a paging cause.

A paging cause value supported by default is a voice or a voice and a first value. More paging cause values may be extended subsequently, provided that a terminal or a network of a first version supports only a voice. How to understand triggering of a paging cause and sending of a paging cause is a problem to be resolved.

In one way of resolving this problem, it is determined, based on the paging cause value supported by the terminal and/or the network, to send the paging cause value or the first value or not to send the paging cause.

In another way of resolving this problem, the terminal determines, based on a case that the received message for paging a terminal does not carry a paging cause or there is an unrecognized paging cause, that the message for paging a terminal is triggered by a cause other than the paging cause value supported by the terminal and/or the network (for example, others).

When a plurality of paging causes are supported by the network, UE needs to obtain the paging cause supported by the network in advance, and presents the supported paging cause to a user through a man-machine interface (Man-Machine Interface, MMI), so that the user configures a priority of a paging response or an important priority of a service. After real paging arrives, the MMIis prevented from disturbing the user to decide whether to respond the paging.
Problem 3: Avoidance of a paging collision

In one idea, the terminal supports avoidance of a paging collision, and the network supports avoidance of a paging collision. When a paging collision occurs or a paging collision is expected to occur, it is requested to avoid a paging collision (including requesting an offset (offset) of a terminal identifier).

In another idea, the network does not support avoidance of a paging collision. When a paging collision occurs or a paging collision is expected to occur, mobile registration is requested (for a fifth generation mobile communication technology system, a new terminal identity (for example, a fifth generation mobile communication (5^{th} generation, 5G) globally unique temporary UE identity (Globally Unique Temporary UE Identity, GUTI)) is obtained in a mobile registration process).

Problem 4: Non-3rd Generation Partnership Project (3rd Generation Partnership Project, 3GPP) access.

A message for paging a terminal over 3GPP access may be sent via 3GPP access or non-3GPP access. It is not clear whether a paging cause via non-3GPP access is supported or not and it is not clear how to an indication indicating refusal to accept paging refuses the message for paging a terminal, for example, through sending via 3GPP or non-3GPP, and this problem needs to be resolved.

In the embodiments of this application, optionally, obtaining may be understood as obtaining from a configuration, receiving, receiving through a request, obtaining through self-learning, deriving from unreceived information, or obtaining after processing based on received information. This may be specifically determined based on an actual requirement, and is not limited in the embodiments of this application. For example, when indication information of a capability sent by a device is not received, it may be deduced that the device does not support the capability.

Optionally, sending may include broadcasting, broadcasting in a system message, and returning after responding to a request.

In an optional embodiment of this application, a communication device may include at least one of the following: a communication network element and a terminal.

In an embodiment of this application, the communication network element may include at least one of the following: a core network element and a radio access network element.

In the embodiments of this application, the core network network element (a CN network element) may include but is not limited to at least one of the following: a core network device, a core network node, a core network function, a core network element, a mobility management entity (Mobility Management Entity, MME), an access management function (Access Management Function, AMF), a session management function (Session Management Function, SMF), a user plane function (User Plane Function, UPF), a serving gateway (serving GW, SGW), a PDN gateway (PDN Gateway, PDN gateway), a policy control function (Policy Control Function, PCF), a policy and charging rules function (Policy and Charging Rules Function, PCRF), a serving GPRS support node (Serving GPRS Support Node, SGSN), a gateway GPRS support node (Gateway GPRS Support Node, GGSN), a unified data management (Unified Data Management, UDM), a unified data repository (Unified Data Repository, UDR), a home subscriber server (Home Subscriber Server, HSS), an application function (Application Function, AF), and a centralized network configuration (Centralized network configuration, CNC).

In an optional embodiment of this application, the radio access network (Radio Access Network, RAN) element may include but is not limited to at least one of the following: a radio access network device, a radio access network node, a radio access network function, a radio access network unit, a Third Generation Partnership Project (Third Generation Partnership Project, 3GPP) radio access network, a non-3GPP radio access network, a centralized unit (Centralized Unit, CU), a distributed unit (Distributed Unit, DU), a base station, an evolved NodeB (evolved Node B, eNB), a 5G base station (gNB), a radio network controller (Radio Network Controller, RNC), a base station (NodeB), a non-3GPP interworking function (Non-3GPP Inter Working Function, N3IWF), an access control (Access Controller, AC) node, an access point (Access Point, AP) device, a wireless local area network (Wireless Local Area Networks, WLAN) node, and a non-3GPP interworking function (Non-3GPP Interworking Function, N3IWF).

In an optional embodiment of this application, the paging cause or the paging cause value is type information of data and/or information triggering the message for paging a terminal.

In an implementation, a paging cause value supported by a paging cause function by default includes a voice.

A range of the paging cause value may include at least one of a voice and a first value (for example, non-voice). The voice may be used to indicate that a cause for triggering paging includes a voice service.

In an implementation, when downlink data and/or information for triggering paging include/includes one of the following: a voice, and other non-voice data and/or information, it may be determined that the paging cause value is a voice.

In another implementation, when downlink data and/or information for triggering paging include/includes a voice and other non-voice data and/or information, it may be determined that the paging cause value is a voice and a first value.

The data may include at least one of the following: control plane data (for example, signaling), and user plane data.

The type information of the data may include a service type to which the data belongs (for example, a voice (voice)).

The paging cause (paging cause) value includes at least one of the following: a voice, signaling (including non-access stratum (Non-Access Stratum, NAS) information and/or radio resource control (Radio Resource Control, RRC) signaling), and an SMS message. The paging cause value may further include a first value.

The first value may represent a cause triggering the message for paging a terminal other than the paging cause value. For example, when the supported paging cause value is a voice, the first value represents a cause other than the voice. For example, when the supported paging cause value is a voice and data, the first value represents a cause other than the voice and the data.

In an optional embodiment of this application, the first message includes the message for paging a terminal, and the message for paging a terminal may include at least one of the following: a paging message (paging message) and a notification message (notification message). The paging message may include at least one of the following: a RAN-initiated paging message and a CN-initiated paging message. The RAN-initiated paging message is, for example, a paging message for a terminal in an RRC inactive (Inactive) state.

In an implementation, a first message of an AS includes a RAN-initiated paging message. A terminal identifier in the RAN-initiated paging message includes a terminal identifier (for example, a resume ID) allocated to the terminal in an RRC inactive state.

In an optional embodiment of this application, a terminal capability includes at least one of the following: terminal radio capability information, and a terminal core network capability. A network capability includes at least one of the following: a network capability of a CN network element and a network capability of a RAN network element.

A communication network core network may be connected to a base station or a non-3rd Generation Partnership Project (3rd Generation Partnership Project, 3GPP) access node. When sending a paging cause to the terminal, the core network may send the paging cause via the base station or the non-3GPP access node. In general, the base station is a device in an access network defined by 3GPP, and the non-3GPP access node is, for example, Wi-Fi.

In an optional embodiment of this application, obtaining a paging cause via 3GPP means obtaining, via a 3GPP access node, a paging cause sent by a network. The 3GPP access node includes a base station.

In an optional embodiment of this application, obtaining a paging cause via non-3GPP means obtaining, via a non-3GPP access node, a paging cause sent by a network.

In an optional embodiment of this application, a multi-card mode includes at least one of the following: a terminal having two or more certificates for accessing a network, and a terminal having two or more global universal subscriber identity modules (Universal Subscriber Identity Module, USIM).

In an optional embodiment of this application, a function of indicating refusal to accept paging includes at least one of the following: sending an indication indicating refusal to accept paging and performing an operation on paging and/or downlink data based on an indication indicating refusal to accept paging. The sending an indication indicating refusal to accept paging includes sending a paging refusal indication after the first message is received. It is not difficult to understand that supporting or not supporting sending of an indication indicating refusal to accept paging is a terminal capability, and supporting or not supporting performing of an operation on paging and/or downlink data based on an indication indicating refusal to accept paging is a network capability.

In an optional embodiment of this application, the indication indicating refusal to accept paging is indication information indicating refusal to paging and includes at least one of the following: a busy indication and a release indication. For example, after receiving paging, the terminal may request to establish a connection from the network and send a release indication. Based on the connection establishment and/or the release indication, the network knows that the terminal refuses acceptance of paging. In an implementation, the indication indicating refusal to accept paging includes at least one of the following: an indication indicating refusal to accept paging of an AS (for example, an indication indicating refusal to accept paging via RRC signaling) and an indication indicating refusal to accept paging of an NAS.

In an optional embodiment of this application, a multi-card enhancement function includes at least one of the following: a paging cause function, a function of indicating refusal to accept paging, a paging collision avoidance function, and a first leaving mode function. In an implementation, the multi-card enhancement function includes at least one of the following: a multi-card enhancement function based on 3GPP access and a multi-card enhancement function based on non-3GPP access.

In an optional embodiment of this application, a first leaving mode is a mode in which the terminal requests to leave the network and includes a first leaving mode based on access stratum (Access Stratum, AS) signaling and a first leaving mode based on NAS signaling.

In an optional embodiment of this application, the mode for leaving the network includes at least one of the following: data transmission between the terminal and the network is stopped or suspended; and a connection between the terminal and the network enters a non-connected state. In an implementation, the terminal leaves the network and the connection between the terminal and the network enters a non-connected state. In another implementation, the terminal leaves the network, the connection between the terminal and the network remains a connected state, but data transmission between the terminal and the network is stopped or suspended.

In an optional embodiment of this application, the data includes control plane data and/or user plane data. The control plane data includes signaling (for example, RRC signaling or NAS signaling).

In an implementation, avoiding a paging collision includes offsetting a UE identifier.

In an implementation, requesting to avoid a paging collision includes requesting an offset of a UE identifier. In an optional embodiment of this application, support by the terminal and the network may represent an intersection between support by the terminal and support by the network.

In an optional embodiment of this application, a first paging cause value is a paging cause value other than the first value, or a first paging cause value does not include the first value. A supported or an unsupported first paging cause value may be one or more values. The first paging cause value may be a voice.

In an implementation, a supported paging cause value includes a supported first paging cause value, and an unsupported paging cause value includes an unsupported first paging cause value. In another implementation, the supported paging cause value may further include the first value, and the unsupported paging cause value may further include the first value.

In an optional embodiment of this application, support by the network includes at least one of the following: support by a CN network element (for example, a CN network element of a serving terminal), and support by a RAN network element (for example, a RAN network element of a serving terminal).

With reference to the accompanying drawings, an information processing method and apparatus, a device, and a readable storage medium provided in the embodiments of this application are described in detail by using some embodiments and application scenarios.

Referring to FIG. 2, an embodiment of this application provides an information processing method, performed by a first communication device. The first communication device may be at least one of the following: a terminal, and the method specifically includes step 201 and step 202.

Step 201: Obtain first information, where the first information includes at least one of the following: a message for paging a terminal, terminal capability information, network capability information, and first indication information.

In an implementation, the first information is obtained from at least one of the following: a CN network element and a RAN network element.

In an implementation, the first communication device is a terminal and obtains the terminal capability information based on a configuration.

In an implementation, the first indication information and/or the network capability information are/is obtained from the CN network element. Optionally, the network capability information may include network capability information of the CN network element.

In an implementation, the network capability information obtained from the RAN network element. Optionally, the network capability information may include network capability information of the RAN network element.

The first indication information is used to indicate at least one of the following: indication information related to a paging cause, indication information related to an indication indicating refusal to accept paging, indication information related to avoidance of a paging collision, indication information related to a first leaving mode, and indication information related to a multi-card enhancement function;
the network capability information includes at least one of the following: network capability information related to a paging cause, network capability information related to an indication indicating refusal to accept paging, network capability information related to avoidance of a paging collision, network capability information of a first leaving mode, and network capability information of a multi-card enhancement function; and
the terminal capability information includes at least one of the following: terminal capability information related to a paging cause, terminal capability information related to an indication indicating refusal to accept paging, terminal capability information related to avoidance of a paging collision, terminal capability information of a first leaving mode, and terminal capability information of a multi-card enhancement function.

Step 202: Perform a first operation based on the first information.

The first operation includes at least one of the following:
(1) determining a paging cause;
(2) determining to request to avoid a paging collision or to request mobile registration;
(3) sending an indication indicating refusal to accept paging; and
(4) presenting, through a man-machine interface (Man-Machine Interface, MMI), a supported paging cause value indicated by the first indication information, and a paging cause value supported by a terminal and/or a network.

In an implementation, avoiding a paging collision includes offsetting a UE identifier (for example, superimposing an offset (offset)). The UE identifier is one of factors used to calculate a paging frame and/or a paging moment. By offsetting the UE identifier, a paging collision can be avoided or reduced. In mobile registration, a terminal identifier is re-allocated. The UE identifier is one of factors used to calculate a paging frame and/or a paging moment. A paging collision can be avoided or reduced through the newly allocated UE identifier.

In an implementation, requesting to avoid a paging collision includes requesting an offset of a UE identifier.

In an optional embodiment of this application, the terminal capability information related to the paging cause and/or the network capability information related to the paging cause include/includes at least one of the following:
(1) that a paging cause function is supported or not supported;
(2) a supported paging cause value and/or an unsupported paging cause value;
(3) that indication information for indicating that a first value is supported or not supported;
(4) that a paging cause function via 3GPP access is supported or not supported;
(5) that a paging cause function via non-3GPP access is supported or not supported;
(6) that a paging cause value via 3GPP access is supported and/or a paging cause value via 3GPP access is not supported; and
(7) that a paging cause value via non-3GPP access is supported and/or a paging cause value via non-3GPP access is not supported.

In an optional embodiment of this application, the indication information related to the paging cause is used to indicate at least one of the following:
(1) that a paging cause function is supported or not supported;
(2) a supported paging cause value and/or an unsupported paging cause value;
(3) indication information for indicating that a first value is supported or not supported;
(4) that a paging cause function via 3GPP access is supported or not supported;
(5) that a paging cause function via non-3GPP access is supported or not supported;
(6) that a paging cause value via 3GPP access is supported and/or a paging cause value via 3GPP access is not supported; and
(7) that a paging cause value via non-3GPP access is supported and/or a paging cause value via non-3GPP access is not supported.

In an optional embodiment of this application, the terminal capability information related to the indication indicating refusal to accept paging and/or the network capability information related to the indication indicating refusal to accept paging include/includes at least one of the following:
(1) that a function of indicating refusal to accept paging is supported or not supported;
(2) that a function of indicating refusal to paging via a 3GPP access node is supported or not supported;
(3) that a function of indicating refusal to paging via a non-3GPP access node is supported or not supported;
(4) that refusal of a first message and/or a paging cause via a non-3GPP access node by an indication indicating refusal to accept paging via a non-3GPP access node is supported or not supported;
(5) that refusal of a first message and/or a paging cause via a 3GPP access node by an indication indicating refusal to accept paging via a non-3GPP access node is supported or not supported;
(6) that refusal of a first message and/or a paging cause via a non-3GPP access node by an indication indicating refusal to accept paging via a 3GPP access node is supported or not supported; and
(7) that refusal of a first message and/or a paging cause via an AS by an indication indicating refusal to accept paging via an NAS is supported or not supported.

In an optional embodiment of this application, the indication information related to the indication indicating refusal to accept paging is used to indicate at least one of the following:
(1) that a function of indicating refusal to accept paging is supported or not supported;
(2) that a function of indicating refusal to paging via a 3GPP access node is supported or not supported;
(3) that a function of indicating refusal to paging via a non-3GPP access node is supported or not supported;
(4) that refusal of a first message and/or a paging cause via a non-3GPP access node by an indication indicating refusal to accept paging via a non-3GPP access node is supported or not supported;
(5) that refusal of a first message and/or a paging cause via a 3GPP access node by an indication indicating refusal to accept paging via a non-3GPP access node is supported or not supported;
(6) that refusal of a first message and/or a paging cause via a non-3GPP access node by an indication indicating refusal to accept paging via a 3GPP access node is supported or not supported; and
(7) that refusal of a first message and/or a paging cause via an AS by an indication indicating refusal to accept paging via an NAS is supported or not supported.

In an optional embodiment of this application, the terminal capability information related to avoidance of the paging collision and/or the network capability information related to avoidance of the paging collision include/includes: avoidance of the paging collision is supported or not supported.

In an optional embodiment of this application, the indication information related to avoidance of the paging collision is used to indicate that:
avoidance of a paging collision is supported or not supported.

In an optional embodiment of this application, the terminal capability information of the multi-card enhancement function and/or the network capability information of the multi-card enhancement function include/includes: that the multi-card enhancement function is supported or not supported.

In an optional embodiment of this application, the indication information related to the multi-card enhancement function is used to indicate that:
the multi-card enhancement function is supported or not supported.

In an optional embodiment of this application, the performing a first operation based on the first information includes:
in a case that a first condition is satisfied, determining that the paging cause value is a first value or determining that the paging cause is a cause other than the paging cause value supported by the terminal and/or the network, where
the first condition includes at least one of the following:
   (1) that the first indication information indicates that a paging cause function is supported;
   (2) that the terminal supports and/or the network supports a paging cause function;
   (3) that the message for paging a terminal does not include a paging cause or includes a paging cause value not recognized by the terminal; and
   (4) that the terminal and/or the network do/does not support a first value.

The first value includes one of the following: others indicating a paging cause other than the paging cause value supported by the terminal and/or the network or a paging cause other than a first paging cause value supported by the terminal and/or the network; non-voice; and default; and the first paging cause value does not include the first value.

In an implementation, it may be determined, based on a case that the paging cause value includes the first value, that the paging cause (for example, one of causes for triggering paging) is a cause other than the paging cause value supported by the terminal and/or the network.

In another implementation, in a case that the terminal supports and/or the network supports the paging cause function, it is determined, based on a case that the message for paging a terminal does not include a paging cause or includes a paging cause value not recognized by the terminal, that the paging cause (for example, one of causes for triggering paging) is a cause other than the paging cause value supported by the terminal and/or the network.

In an optional embodiment of this application, the performing a first operation based on the first information includes:
in a case that a second condition is satisfied, requesting an operation of avoiding a paging collision, where
the second condition includes at least one of the following:
   (1) that the first indication information indicates that a paging collision avoidance function is supported;
   (2) that the terminal supports and/or the network supports a paging collision avoidance function;
   (3) that a paging collision occurs or a paging collision is expected to occur; and
   (4) that the terminal is in a multi-card mode.

In an optional embodiment of this application, in a case that a third condition is satisfied, an operation of mobile registration is requested, where
the third condition includes at least one of the following:
(1) that the terminal supports avoidance of a paging collision;
(2) that the network does not support avoidance of a paging collision;
(3) that a paging collision occurs or a paging collision is expected to occur; and
(4) that the terminal is in a multi-card mode.

In an implementation, the terminal supports avoidance of a paging collision, and the network supports avoidance of a paging collision. When a paging collision occurs or a paging collision is expected to occur, it is requested to avoid a paging collision.

In an implementation, the network does not support avoidance of a paging collision. When a paging collision occurs or a paging collision is expected to occur, the terminal may request mobile registration.

In an optional embodiment of this application, the performing a first operation based on the first information includes:
in a case that a fourth condition is satisfied, sending the indication indicating refusal to accept paging, where
the fourth condition includes at least one of the following:
   (1) that the first indication information indicates that a paging cause function is supported;
   (2) that the terminal supports and/or the network supports a paging cause function;
   (3) that the first indication information indicates that a function of indicating refusal to accept paging is supported;
   (4) that the terminal supports and/or the network supports a function of indicating refusal to accept paging;
   (5) that the message for paging a terminal carries a paging cause; and
   (6) that the terminal is in a multi-card mode.

In an implementation, only when the message for paging a terminal carries a paging cause, the terminal sends an indication indicating refusal to accept paging when refusing to receive the paging.

In an implementation, when a plurality of paging cause values are supported by the terminal and/or the network, the terminal may learn a paging cause supported by the network in advance, and presents, to a user through a man-machine interface (Man-Machine Interface, MMI), the paging cause value supported by the terminal and/or the network, so that the user configures a priority of a paging response or an important priority of a service. After real paging arrives, the MMI is prevented from disturbing the user to decide whether to respond the paging.

In an optional embodiment of this application, the performing a first operation based on the first information includes:
in a case that a tenth condition is satisfied, sending an indication indicating refusal to accept paging of an NAS or refusing a first message and/or a paging cause of an AS by an indication indicating refusal to accept paging of an NAS, where
the tenth condition includes at least one of the following:
   (1) that the first message and/or the paging cause of the AS are/is received;
   (2) that a terminal identifier included in the first message of the AS is a terminal identifier of the terminal in an inactive state;
   (3) that the terminal is in an idle state; and
   (4) that the terminal refuses acceptance of the first message and/or the paging cause.

In an optional embodiment of this application, the sending an indication indicating refusal to accept paging includes at least one of the following:
(1) sending the indication indicating refusal to accept paging via a 3GPP access node;
(2) sending the indication indicating refusal to accept paging via a non-3GPP access node;
(3) sending the indication indicating refusal to accept paging via a non-3GPP access node, and refusing a first message and/or a paging cause received via a non-3GPP access node;
(4) sending the indication indicating refusal to accept paging via a non-3GPP access node, and refusing a first message and/or a paging cause received via a 3GPP access node;
(5) sending the indication indicating refusal to accept paging via a 3GPP access node, and refusing a first message and/or a paging cause received via a non-3GPP access node; and
(6) refusing a first message and/or a paging cause of an AS by an indication indicating refusal to accept paging of an NAS.

Optionally, in a case that a fifth condition is satisfied, refusing the indication indicating refusal to accept paging via the 3GPP access node, where the fifth condition includes at least one of the following:
(1) that the first indication information indicates that a function of indicating refusal to accept paging is supported;
(2) that the terminal supports and/or the network supports a function of indicating refusal to accept paging;
(3) that the first indication information indicates that a function of indicating refusal to paging via a 3GPP access node is supported;
(4) that the terminal supports and/or the network supports a function of indicating refusal to paging via a 3GPP access node;
(5) that the first indication information indicates that refusal of a first message and/or a paging cause via a non-3GPP access node by an indication indicating refusal to accept paging via a 3GPP access node is supported;
(6) that the terminal supports and/or the network supports refusal of a first message and/or a paging cause via a 3GPP access node by an indication indicating refusal to accept paging via a non-3GPP access node; and
(7) that the terminal is in a multi-card mode.

Optionally, in a case that a sixth condition is satisfied, sending the indication indicating refusal to accept paging via the non-3GPP access node, where the sixth condition includes at least one of the following:
(1) that the first indication information indicates that a function of indicating refusal to accept paging is supported;
(2) that the terminal supports and/or the network supports a function of indicating refusal to accept paging;
(3) that the first indication information indicates that a function of indicating refusal to paging via a non-3GPP access node is supported;
(4) that the terminal supports and/or the network supports a function of indicating refusal to paging via a non-3GPP access node;
(5) that the first indication information indicates that refusal of a first message and/or a paging cause via a non-3GPP access node by an indication indicating refusal to accept paging via a non-3GPP access node is supported;
(6) that the terminal supports and/or the network supports refusal of a first message and/or a paging cause via a non-3GPP access node by an indication indicating refusal to accept paging via a non-3GPP access node;
(7) that the first indication information indicates that refusal of a first message and/or a paging cause via a 3GPP access node by an indication indicating refusal to accept paging via a non-3GPP access node is supported;
(8) that the terminal supports and/or the network supports refusal of a first message and/or a paging cause via a 3GPP access node by an indication indicating refusal to accept paging via a non-3GPP access node; and
(9) that the terminal is in a multi-card mode.

Optionally, in a case that a seventh condition is satisfied, refusing, by the indication indicating refusal to accept paging via the non-3GPP access node, the first message and/or the paging cause received via the non-3GPP access node, where
the seventh condition includes at least one of the following: that the first indication information indicates that refusal of a first message and/or a paging cause via a non-3GPP access node by an indication indicating refusal to accept paging via a non-3GPP access node is supported; that the terminal supports and/or the network supports refusal of a first message and/or a paging cause via a non-3GPP access node by an indication indicating refusal to accept paging via a non-3GPP access node; and that the terminal is in a multi-card mode.

Optionally, in a case that an eighth condition is satisfied, the first message and/or the paging cause received via the 3GPP access node is refused by the indication indicating refusal to accept paging via the non-3GPP access node, where the eighth condition includes at least one of the following: that the first indication information indicates that refusal of a first message and/or a paging cause via a 3GPP access node by paging acceptance refusal via a non-3GPP access node is supported; that the terminal supports and/or the network supports refusal of a first message and/or a paging cause via a 3GPP access node by an indication indicating refusal to accept paging via a non-3GPP access node; and that the terminal is in a multi-card mode.

Optionally, in a case that a ninth condition is satisfied, the first message and/or the paging cause received via the non-3GPP access node is refused by the indication indicating refusal to accept paging via the 3GPP access node, where the ninth condition includes at least one of the following: that the first indication information indicates that refusal of a first message and/or a paging cause via a non-3GPP access node by an indication indicating refusal to accept paging via a 3GPP access node is supported; that the terminal supports and/or the network supports refusal of a first message and/or a paging cause via a non-3GPP access node by an indication indicating refusal to accept paging via a 3GPP access node; and that the terminal is in a multi-card mode.

In this embodiment of this application, the refusing a first message and/or a paging cause of an AS by an indication indicating refusal to accept paging of an NAS includes: in a case that an eleventh condition is satisfied, sending the indication indicating refusal to accept paging of the NAS, where
the eleventh condition includes at least one of the following:
(1) that the first message and/or the paging cause of the AS are/is received;
(2) that a terminal identifier included in the first message of the AS is an identifier of the terminal in an inactive state;
(3) that the terminal is in an idle state; and
(4) that acceptance of the first message and/or the paging cause is refused.

In an implementation, the first indication information may include at least one of the following: indication information related to avoidance of a paging collision, and indication information related to a multi-card enhancement function. In this case, the indication information related to the multi-card enhancement function is used to indicate at least one of the following: indication information related to a paging cause, indication information related to an indication indicating refusal to accept paging, and indication information related to a first leaving mode.

It is not difficult to understand that the indication information related to the multi-card enhancement function may be used to indicate that (1) the paging cause function, (2) the function of refusal to accept paging, and (3) the first leaving mode function are supported or not supported. When the multi-card enhancement function cannot be used to indicate the indication information related to avoidance of the paging collision, additional indication information related to avoidance of a paging collision may be used for indication.

In an implementation, the network capability information includes at least one of the following: network capability information related to avoidance of a paging collision, and network capability information of a multi-card enhancement function.

In an implementation, the terminal capability information includes at least one of the following: terminal capability information related to avoidance of a paging collision, and terminal capability information of a multi-card enhancement function.

In an optional embodiment of this application, before the step of obtaining first information, the method further includes: sending the terminal capability information.

In an optional embodiment of this application, flexible deployment of a multi-card terminal, determination of a paging occasion avoidance mode, and determination of a paging cause sending mode are supported, thereby improving reliability of a communication system.

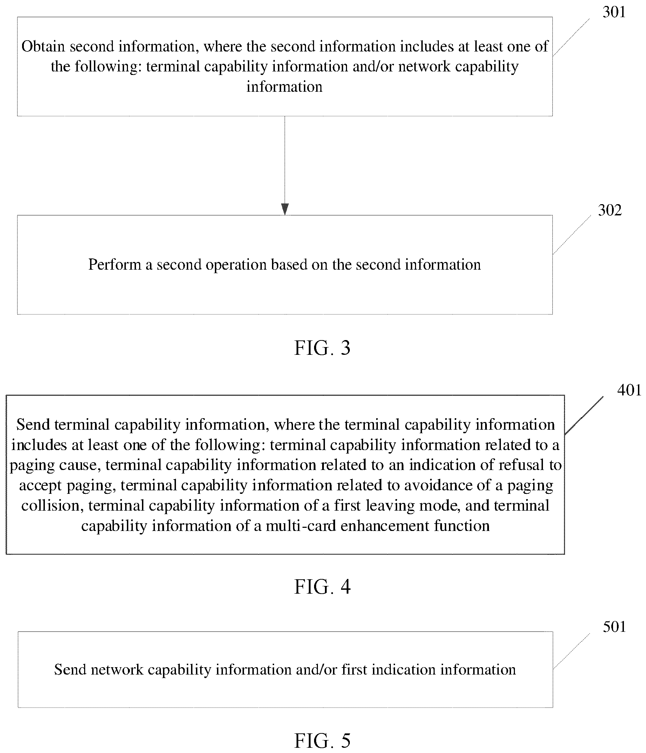

Referring to FIG. 3, an embodiment of this application provides an information processing method, performed by a second communication device. The second communication device may be at least one of the following: a core network network element (a CN network element such as an access and mobility management function (Access and Mobility Management function, AMF), a session management function (Session Management Function, SMF), and a RAN network element, and the method specifically includes step 301 and step 302.

Step 301: Obtain second information, where the second information includes at least one of the following: terminal capability information and/or network capability information.

In an implementation, the second information is obtained from at least one of the following: a terminal, a RAN network element, and a CN network element.

In an implementation, a first communication device is a CN network element and obtains network capability information of the CN network element based on a configuration.

In an implementation, the terminal capability information may be obtained from the terminal. Optionally, the terminal capability information may include terminal radio capability information and/or terminal core network capability information.

In an implementation, the terminal capability information and/or the network capability information of the RAN network element may be obtained from the RAN network element. Optionally, the terminal capability information may include terminal radio capability information.

Step 302: Perform a second operation based on the second information.

The second operation includes at least one of the following:
(1) sending a paging cause or not sending a paging cause;
(2) determining a paging cause value;
(3) determining first indication information;
(4) sending a paging cause via a non-3GPP access node or sending a paging cause via a notification message;
(5) sending a paging cause and/or a first message via a 3GPP access node, and receiving an indication indicating refusal to accept paging via a non-3GPP node;
(6) sending a paging cause and/or a first message via a non-3GPP access node, and receiving an indication indicating refusal to accept paging via a non-3GPP node; and
(7) sending a paging cause and/or a first message via a non-3GPP access node, and receiving an indication indicating refusal to accept paging via a 3GPP node;

where the first indication information is used to indicate at least one of the following: indication information related to a paging cause, indication information related to an indication indicating refusal to accept paging, indication information related to avoidance of a paging collision, indication information related to a first leaving mode, and indication information related to a multi-card enhancement function;
the terminal capability information includes at least one of the following: terminal capability information related to a paging cause, terminal capability information related to an indication indicating refusal to accept paging, terminal capability information related to avoidance of a paging collision, terminal capability information of a first leaving mode, and terminal capability information of a multi-card enhancement function;
the network capability information includes at least one of the following: network capability information related to a paging cause, network capability information related to an indication indicating refusal to accept paging, network capability information related to avoidance of a paging collision, network capability information of a first leaving mode, and network capability information of a multi-card enhancement function; and
the first message includes a message for paging a terminal.

In an optional embodiment of this application, the terminal capability information related to the paging cause and/or the network capability information related to the paging cause include/includes at least one of the following:
(1) that a paging cause function is supported or not supported;
(2) a supported paging cause value and/or an unsupported paging cause value;
(3) indication information for indicating that a first value is supported or not supported;
(4) that a paging cause function via 3GPP access is supported or not supported;
(5) that a paging cause function via non-3GPP access is supported or not supported;
(6) that a paging cause value via 3GPP access is supported and/or a paging cause value via 3GPP access is not supported; and
(7) that a paging cause value via non-3GPP access is supported and/or a paging cause value via non-3GPP access is not supported.

In an optional embodiment of this application, the indication information related to the paging cause is used to indicate at least one of the following:
(1) that a paging cause function is supported or not supported;
(2) a supported paging cause value and/or an unsupported paging cause value;
(3) indication information for indicating that a first value is supported or not supported;
(4) that a paging cause function via 3GPP access is supported or not supported;
(5) that a paging cause function via non-3GPP access is supported or not supported;
(6) that a paging cause value via 3GPP access is supported and/or a paging cause value via 3GPP access is not supported; and
(7) that a paging cause value via non-3GPP access is supported and/or a paging cause value via non-3GPP access is not supported.

In an optional embodiment of this application, the indication information related to the indication indicating refusal to accept paging is used to indicate at least one of the following:
(1) that a function of indicating refusal to accept paging is supported or not supported;
(2) that a function of indicating refusal to paging via a 3GPP access node is supported or not supported;
(3) that a function of indicating refusal to paging via a non-3GPP access node is supported or not supported;
(4) that refusal of a first message and/or a paging cause via a non-3GPP access node by an indication indicating refusal to accept paging via a non-3GPP access node is supported or not supported;
(5) that refusal of a first message and/or a paging cause via a 3GPP access node by sending an indication indicating refusal to accept paging via a non-3GPP access node is supported or not supported; and
(6) that refusal of a first message and/or a paging cause via a non-3GPP access node by an indication indicating refusal to accept paging via a 3GPP access node is supported or not supported.

In an implementation, that responding to a first message and/or a paging cause via a non-3GPP access node by an indication indicating refusal to accept paging via a non-3GPP access node is supported or not supported includes: sending the indication indicating refusal to accept paging via the non-3GPP access node is supported or not supported after the first message and/or the paging cause are/is obtained via the non-3GPP access node.

In an implementation, that responding to a first message and/or a paging cause via a 3GPP access node by an indication indicating refusal to accept paging via a non-3GPP access node is supported or not supported includes: sending the indication indicating refusal to accept paging via the non-3GPP access node is supported or not supported after the first message and/or the paging cause are/is obtained via the 3GPP access node.

In an implementation, that refusal of a first message and/or a paging cause via a non-3GPP access node by sending an indication indicating refusal to accept paging via a 3GPP access node is supported or not supported includes: sending the indication indicating refusal to accept paging via the 3GPP access node is supported or not supported after the first message and/or the paging cause are/is obtained via the non-3GPP access node.

In an implementation, that a function of indicating refusal to accept paging is supported or not supported includes at least one of the following: sending the indication indicating refusal to accept paging after the first message and/or the paging cause is supported or not supported.

In an implementation, that refusal of a first message and/or a paging cause via a non-3GPP access node by an indication indicating refusal to accept paging via a non-3GPP access node is supported or not supported includes: receiving the indication indicating refusal to accept paging via the non-3GPP access node is supported or not supported after the first message and/or the paging cause are/is sent via the non-3GPP access node.

In an implementation, that refusal of a first message and/or a paging cause via a 3GPP access node by an indication indicating refusal to accept paging via a non-3GPP access node is supported or not supported includes: receiving the indication indicating refusal to accept paging via the non-3GPP access node is supported or not supported after the first message and/or the paging cause are/is sent via the 3GPP access node.

In an implementation, that refusal of a first message and/or a paging cause via a non-3GPP access node by an indication indicating refusal to accept paging via a 3GPP access node is supported or not supported includes: receiving the indication indicating refusal to accept paging via the 3GPP access node is supported or not supported after the first message and/or the paging cause are/is sent via the non-3GPP access node.

In an implementation, that a function of indicating refusal to accept paging is supported or not supported includes at least one of the following: receiving the indication indicating refusal to accept paging after the first message and/or the paging cause is supported or not supported; and processing the first message and/or the paging cause based on the indication indicating refusal to accept paging.

In an implementation, the indication indicating refusal to accept paging is a response to the first message and/or the paging cause.

In an optional embodiment of this application, the terminal capability information related to avoidance of the paging collision and/or the network capability information related to avoidance of the paging collision include/includes: avoidance of the paging collision is supported or not supported.

In an optional embodiment of this application, the indication information related to avoidance of the paging collision is used to indicate that avoidance of the paging collision is supported or not supported.

In an optional embodiment of this application, the terminal capability information related to the multi-card enhancement function and/or the network capability information related to the multi-card enhancement function include/includes: that the multi-card enhancement function is supported or not supported.

In an optional embodiment of this application, the indication information related to the multi-card enhancement function is used to indicate that the multi-card enhancement function is supported or not supported.

Optionally, the multi-card enhancement function includes at least one of the following: a paging cause function, a function of indicating refusal to accept paging, and a paging collision avoidance function.

In an optional embodiment of this application, the performing a second operation based on the second information includes:
in a case that a first condition is satisfied, determining that the paging cause value is a paging cause value corresponding to first information and/or first data, where
the first condition includes at least one of the following:
   (1) that first information and/or first data arrive/arrives;
   (2) that the terminal supports a paging cause value corresponding to the first information and/or the first data;
   (3) that the network supports or is capable of obtaining the paging cause value corresponding to the first information and/or the first data; and
   (4) that the first information and/or the first data include/includes a voice, or the paging cause value corresponding to the first information and/or the first data includes a voice.

In an optional embodiment of this application, in a case that a second condition is satisfied, it is determined that the paging cause value is a first value, where
the second condition includes at least one of the following:
   (1) that the second information and/or second data arrive/arrives;
   (2) that the terminal does not support a paging cause value corresponding to the second information and/or the second data;
   (3) that the network does not support or is not capable of obtaining the paging cause value corresponding to the second information and/or the second data;
   (4) that the terminal and/or the network support/supports the first value;
   (5) that information and/or data about the terminal arrive/arrives and the information and/or the data about the terminal do/does not include data and/or information corresponding to a first paging cause value supported by the terminal and/or the network, where the first paging cause value is a paging cause value other than the first value; and
   (6) that information and/or data about the terminal arrive/arrives and the information and/or the data about the terminal are/is non-voice or include/includes non-voice, where
the first value includes one of the following: others indicating a paging cause other than the paging cause value supported by the terminal and/or the network or a paging cause other than a first paging cause value supported by the terminal and/or the network; non-voice; and default; and the first paging cause value does not include the first value.

In an implementation, if the paging cause function is supported, the first value is supported by default.

In an implementation, if the paging cause function is supported, a voice is supported as a paging cause value by default.

In an implementation, the paging cause value supported by the terminal does not include the first value.

In an optional embodiment of this application, the performing a second operation based on the second information includes:
in a case that a third condition is satisfied, sending a paging cause or indication information that is related to a paging cause and that indicates that a paging cause function is supported, where
the third condition includes at least one of the following:
   (1) that the terminal supports a paging cause function;
   (2) that the network supports a paging cause function;
   (3) that the terminal supports a function of indicating refusal to accept paging;
   (4) that the network supports a function of indicating refusal to accept paging;
   (5) that the terminal supports a first leaving mode;
   (6) that first information and/or first data arrive/arrives;
   (7) that the terminal supports a paging cause value corresponding to the first information and/or the first data;
   (8) that the network supports or is capable of obtaining the paging cause value corresponding to the first information and/or the first data;
   (9) that the terminal is in a multi-card mode; and
   (10) that information and/or data about the terminal arrive/arrives and the information and/or the data about the terminal include/includes data and/or information corresponding to the paging cause value supported by the terminal and/or the network.

In an implementation, that the network supports a paging cause function includes: a RAN network element (for example, a RAN network element of a serving terminal) and/or a CN network element (for example, a CN network element of a serving terminal) support/supports a paging cause function.

In an optional embodiment of this application, in a case that a fourth condition is satisfied, a paging cause or indication information that is related to a paging cause and that indicates that a paging cause function is not supported is not sent, where
the fourth condition includes at least one of the following:
(1) that the terminal and/or the network do/does not support a paging cause function;
(2) that a RAN network element does not support a paging cause function;
(3) that the terminal does not support a function of indicating refusal to accept paging;
(4) that the network does not support a function of indicating refusal to accept paging;
(5) that the terminal does not support a first leaving mode;
(6) that the terminal is not in a multi-card mode;
(7) that the second information and/or second data arrive/arrives;
(8) that the terminal does not support a paging cause value corresponding to the second information and/or the second data;
(9) that the network does not support or is not capable of obtaining the paging cause value corresponding to the second information and/or the second data;
(10) that information and/or data about the terminal arrive/arrives and the information and/or the data about the terminal do/does not include data and/or information corresponding to the paging cause value supported by the terminal and/or the network;
(11) that the second information and/or the second data about the terminal is non-voice; and
(12) that the terminal and/or the network do/does not support a first value.

In an optional embodiment of this application, a paging cause is not sent in a case that a thirteenth condition is satisfied, where
the thirteenth condition includes at least one of the following:
(1) that the terminal and/or the network support/supports a paging cause function;
(2) that information and/or data about the terminal arrive/arrives and the information and/or the data about the terminal do/does not include data and/or information corresponding to the paging cause value supported by the terminal and/or the network;
(3) that information and/or data about the terminal arrive/arrives and the information and/or the data about the terminal do/does not include a voice;
(4) that information and/or data about the terminal arrive/arrives and the information and/or the data about the terminal do/does not include data and/or information corresponding to a first paging cause value supported by the terminal and/or the network, where the first paging cause value is a paging cause value other than the first value; and
(5) that the terminal and/or the network do/does not support a first value.

In an implementation, a paging cause is not sent when the information and/or the data about the terminal arrive/arrives and the information and/or the data about the terminal do/does not include a voice, and the terminal and/or the network do/does not support the first value.

In an implementation, a paging cause is not sent in a case that the paging cause value supported by the terminal and/or the network support is a voice but the first value is not supported, and the information and/or the data about the terminal arrive/arrives and the information and/or the data about the terminal do/does not include a voice.

In an implementation, a paging cause is not sent when the information and/or the data about the terminal arrive/arrives and the information and/or the data about the terminal do/does not include the data and/or the information corresponding to the paging cause value supported by the terminal and/or the network.

In an implementation, a paging cause is not sent when the information and/or the data about the terminal do/does not include the data and/or the information corresponding to the first paging cause value supported by the terminal and/or the network, and the terminal and/or the network do/does not support the first value.

In an implementation, a paging cause is not sent when the RAN network element does not support the paging cause function. For example, a paging request message sent by a CN network element to a RAN network element does not include a paging cause. Alternatively, for example, in a case that a RAN network element receives a paging request from a CN network element and the paging request includes a paging cause, the RAN network element determines that a paging message sent to the terminal does not include a paging cause in a case that the RAN network element and/or the terminal do/does not support the paging cause function. It is not difficult to understand that when the terminal and the CN network element support the paging cause function but the RAN network element does not support the paging cause function, the paging request message sent by the CN network element to the RAN network element does not include the paging cause.

In an optional embodiment of this application, the performing a second operation based on the second information includes:
in a case that a fifth condition is satisfied, sending a paging cause via non-3GPP access or sending a paging cause via a notification message, where
the fifth condition includes at least one of the following:
   (1) that the terminal and/or the network support/supports a paging cause function via non-3GPP access;
   (2) that the network supports a function of sending a paging cause via a notification message; and
   (3) that the terminal supports a function of receiving a paging cause via a notification message.

In an implementation, that the terminal and/or the network support/supports a paging cause function via non-3GPP access includes at least one of the following:
that the network supports a function of sending a paging cause via a non-3GPP access node; and
that the terminal supports a function of receiving a paging cause via a non-3GPP access node.

In an implementation, the paging cause is a paging that triggers 3GPP access.

In an optional embodiment of this application, the performing a second operation based on the second information includes:
in a case that a sixth condition is satisfied, determining that the first indication information indicates that a first function is supported, where
the sixth condition includes: that the terminal and the network support the first function; and
the first function includes at least one of the following: a paging cause function, a function of indicating refusal to accept paging, a paging collision avoidance function, and a function of a first leaving mode.

In an optional embodiment of this application, before the obtaining a terminal capability, the method further includes:
requesting terminal capability information and/or network capability information of a RAN network element from the RAN network element.

In an implementation, the terminal capability information includes a radio resource control (RRC) capability, and the second communication device may obtain the terminal capability information from the RAN network element.

In an optional embodiment of this application, the terminal capability information related to the paging cause includes at least one of the following: terminal radio capability information related to the paging cause and terminal core network capability information related to the paging cause;
the terminal capability information related to the indication indicating refusal to accept paging includes at least one of the following: terminal radio capability information related to the indication indicating refusal to accept paging and terminal core network capability information related to the indication indicating refusal to accept paging;
the terminal capability information related to avoidance of the paging collision includes at least one of the following: terminal radio capability information related to avoidance of the paging collision and terminal core network capability information related to avoidance of the paging collision;
the terminal capability information related to the first leaving mode includes at least one of the following: terminal radio capability information related to the first leaving mode and terminal core network capability information related to the first leaving mode; and
the terminal capability information related to the multi-card enhancement function includes at least one of the following: terminal radio capability information related to the multi-card enhancement function and terminal core network capability information related to the multi-card enhancement function.

In an optional embodiment of this application, flexible deployment of a multi-card terminal, determination of a paging occasion avoidance mode, and determination of a paging cause sending mode are supported, thereby improving reliability of a communication system.

Referring to FIG. 4, an embodiment of this application provides an information processing method, performed by a third communication device. The second communication device may be at least one of the following: a terminal and a RAN network element, and the method specifically includes step 401.

Step 401: Send terminal capability information, where the terminal capability information includes at least one of the following: terminal capability information related to a paging cause, terminal capability information related to an indication indicating refusal to accept paging, terminal capability information related to avoidance of a paging collision, terminal capability information of a first leaving mode, and terminal capability information of a multi-card enhancement function.

In an implementation, the terminal capability information is sent to a CN network element. Optionally, the terminal capability information may include terminal radio capability information and/or terminal core network capability information.

In an optional embodiment of this application, the terminal capability information related to the paging cause includes at least one of the following:
(1) that a paging cause function is supported or not supported;
(2) a supported paging cause value and/or an unsupported paging cause value;
(3) that a paging cause function via 3GPP access is supported or not supported;
(4) that a paging cause function via non-3GPP access is supported or not supported;
(5) that a paging cause value via 3GPP access is supported and/or a paging cause value via 3GPP access is not supported; and
(6) that a paging cause value via non-3GPP access is supported and/or a paging cause value via non-3GPP access is not supported.

In an optional embodiment of this application, the terminal capability information related to the indication indicating refusal to accept paging includes at least one of the following:
(1) that a function of indicating refusal to accept paging is supported or not supported;
(2) that a function of indicating refusal to paging via a 3GPP access node is supported or not supported;
(3) that a function of indicating refusal to paging via a non-3GPP access node is supported or not supported;
(4) that refusal of a first message and/or a paging cause via a non-3GPP access node by an indication indicating refusal to accept paging via a non-3GPP access node is supported or not supported;
(5) that refusal of a first message and/or a paging cause via a 3GPP access node by sending an indication indicating refusal to accept paging via a non-3GPP access node is supported or not supported; and
(6) that refusal of a first message and/or a paging cause via a non-3GPP access node by sending an indication indicating refusal to accept paging via a 3GPP access node is supported or not supported.

The terminal capability information related to avoidance of the paging collision includes: that avoidance of a paging collision is supported or not supported.

In an optional embodiment of this application, the terminal capability information related to the multi-card enhancement function includes: that a multi-card enhancement function is supported or not supported.

In an optional embodiment of this application, the terminal capability information related to the paging cause includes at least one of the following: terminal radio capability information related to the paging cause and terminal core network capability information related to the paging cause;
the terminal capability information related to the indication indicating refusal to accept paging includes at least one of the following: terminal radio capability information related to the indication indicating refusal to accept paging and terminal core network capability information related to the indication indicating refusal to accept paging;
the terminal capability information related to avoidance of the paging collision includes at least one of the following: terminal radio capability information related to avoidance of the paging collision and terminal core network capability information related to avoidance of the paging collision;
the terminal capability information related to the first leaving mode includes at least one of the following: terminal radio capability information related to the first leaving mode and terminal core network capability information related to the first leaving mode; and
the terminal capability information related to the multi-card enhancement function includes at least one of the following: terminal radio capability information related to the multi-card enhancement function and terminal core network capability information related to the multi-card enhancement function, where
the terminal radio capability information related to the paging cause and/or the terminal core network capability information related to the paging cause include/includes at least one of the following:
   (1) that a paging cause function is supported or not supported;
   (2) a supported paging cause value and/or an unsupported paging cause value;
   (3) that a paging cause function via 3GPP access is supported or not supported;
   (4) that a paging cause function via non-3GPP access is supported or not supported;
   (5) that a paging cause value via 3GPP access is supported and/or a paging cause value via 3GPP access is not supported; and
   (6) that a paging cause value via non-3GPP access is supported and/or a paging cause value via non-3GPP access is not supported.

In an optional embodiment of this application, the terminal radio capability information related to the indication indicating refusal to accept paging and the terminal core network capability information related to the indication indicating refusal to accept paging include/includes at least one of the following:
(1) that a function of indicating refusal to accept paging is supported or not supported;
(2) that a function of indicating refusal to paging via a 3GPP access node is supported or not supported;
(3) that a function of indicating refusal to paging via a non-3GPP access node is supported or not supported;
(4) that refusal of a first message and/or a paging cause via a non-3GPP access node by an indication indicating refusal to accept paging via a non-3GPP access node is supported or not supported;
(5) that refusal of a first message and/or a paging cause via a 3GPP access node by sending an indication indicating refusal to accept paging via a non-3GPP access node is supported or not supported; and
(6) that refusal of a first message and/or a paging cause via a non-3GPP access node by an indication indicating refusal to accept paging via a 3GPP access node is supported or not supported.

The terminal radio capability information related to avoidance of the paging collision and/or the terminal core network capability information related to avoidance of the paging collision includes: that avoidance of a paging collision is supported or not supported.

In an optional embodiment of this application, the terminal radio capability information related to the multi-card enhancement function and/or the terminal core network capability information related to the multi-card enhancement function includes:
that a multi-card enhancement function is supported or not supported.

In this embodiment of this application, before the step of sending terminal capability information, the method further includes:
obtaining first request information, where the first request information is used to request the terminal capability information.

In an implementation, the first request information is obtained from the CN network. In an implementation, the terminal capability information is sent to the CN network. Optionally, the terminal capability information may include terminal radio capability information and/or terminal core network capability information.

In an implementation, the terminal capability is a terminal RRC capability. A CN network element may request the terminal radio capability information from a RAN network element. The CN network element determines the first indication information based on the terminal RRC capability and a terminal NAS capability.

In an optional embodiment of this application, flexible deployment of a multi-card terminal, determination of a paging occasion avoidance mode, and determination of a paging cause sending mode are supported, thereby improving reliability of a communication system.

Referring to FIG. 5, an embodiment of this application provides an information processing method, performed by a fourth communication device. The fourth communication device includes a RAN network element, and the method specifically includes step 501.

Step 501: Send network capability information and/or first indication information.

In an implementation, the network capability information and/or the first indication information is sent to a terminal.

In an implementation, the network capability information is sent to a CN network element.

In an implementation, the network capability information includes network capability information of a RAN network element.

The first indication information is used to indicate at least one of the following: indication information related to a paging cause, indication information related to an indication indicating refusal to accept paging, indication information related to avoidance of a paging collision, indication information related to a first leaving mode, and indication information related to a multi-card enhancement function; and
the network capability information includes at least one of the following: network capability information related to a paging cause, network capability information related to an indication indicating refusal to accept paging, network capability information related to avoidance of a paging collision, network capability information of a first leaving mode, and network capability information of a multi-card enhancement function.

In an implementation, the network capability information and/or the first indication information are/is broadcast by the RAN network element.

In an implementation, the network capability information is the network capability information of the RAN network element.

In an optional embodiment of this application, flexible deployment of a multi-card terminal, determination of a paging occasion avoidance mode, and determination of a paging cause sending mode are supported, thereby improving reliability of a communication system.

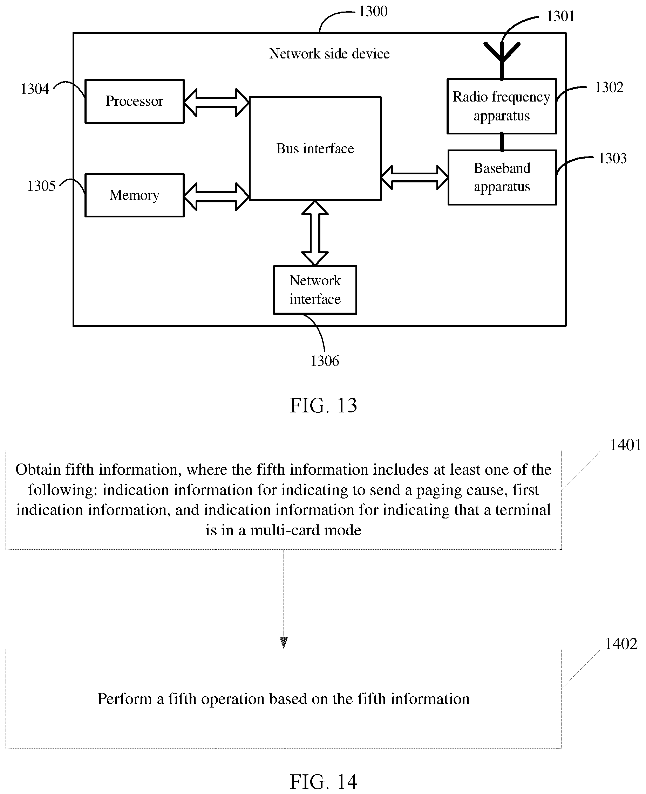

Referring to FIG. 14, an embodiment of this application provides an information processing method, performed by a fifth communication device. The fifth communication device includes a RAN network element, and the method specifically includes step 1401 and step 1402.

Step 1401: Obtain fifth information, where the fifth information includes at least one of the following: indication information for indicating to send a paging cause, first indication information, and indication information for indicating that a terminal is in a multi-card mode.

In an implementation, the fifth information is obtained from a CN network element.

Step 1402: Perform a fifth operation based on the fifth information.

The fifth operation includes at least one of the following:
determining a paging cause; and
sending a paging cause.

In this embodiment of this application, the operation of determining a paging cause value includes: determining the paging cause value based on a differentiated services code point (Differentiated Services Code Point, DSCP) value in a data packet; and
the operation of sending a paging cause includes including the determined paging cause value in a first message.

In this embodiment of this application, the sending a paging cause includes: sending the paging cause in a case that a twelfth condition is satisfied, where
the twelfth condition includes at least one of the following:
that the determined paging cause value is a voice;
that the determined paging cause value is a paging cause value supported by the terminal and/or a network;
that the first indication information indicates that a paging cause function is supported;
that the terminal and/or a RAN network element support/supports a paging cause function; and
that the terminal and/or the network support/supports a paging cause function.

In an optional embodiment of this application, flexible deployment of a multi-card terminal, determination of a paging occasion avoidance mode, and determination of a paging cause sending mode are supported, thereby improving reliability of a communication system.

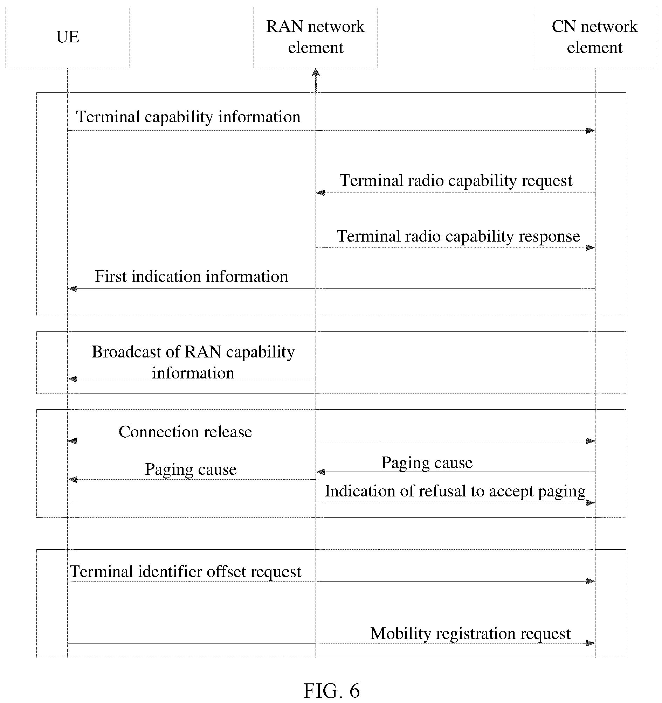

Referring to FIG. 6, specific steps are as follows:
Step 1: UE sends terminal capability information to a CN network element.

Step 2: The CN network element sends a terminal radio capability request to a RAN network element.

Step 3: The RAN network element sends a terminal radio capability response to the CN network element.

Step 4: The CN network element sends first indication information to the UE.

Step 5: The RAN network element sends RAN capability information to the UE for broadcast.

Step 6: The UE and the CN network element release a connection.

Step 7: The CN network element sends a paging cause to the RAN network element.

Step 8: The RAN network element sends the paging cause to the UE.

Step 8: The UE sends a busy indication to the CN network element.

Step 9: The UE sends an indication indicating refusal to accept paging to the CN network element.

Step 10: The UE sends a UE identifier offset request to the CN network element.

Step 11: The UE sends a mobility registration update request to the CN network element.

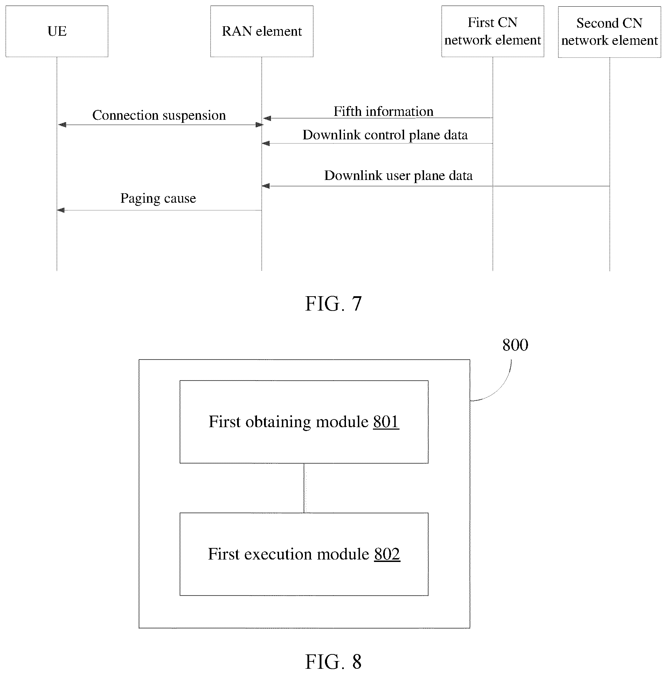

Referring to FIG. 7, specific steps are as follows:
Step 1: A first CN network element sends fifth information to a RAN network element, where the fifth information includes at least one of the following: indication information for indicating to send a paging cause, first indication information, and indication information for indicating that a terminal is in a multi-card mode.

Step 2: The UE and the RAN perform connection suspension processing.

Step 3: The first CN network element sends downlink control plane data to the RAN network element.

Step 4: A second CN network element sends downlink user plane data to the RAN network element.

Step 5: The RAN network element sends a message for paging a terminal to the UE, where the message including a paging cause, and a paging cause value is a paging cause value corresponding to the downlink control plane data and/or the user plane data.

Referring to FIG. 8, an embodiment of this application provides an information processing apparatus, and the apparatus includes:
a first obtaining module 801, configured to obtain first information, where the first information includes at least one of the following: a message for paging a terminal, terminal capability information, network capability information, and first indication information; and
a first execution module 802, configured to perform a first operation based on the first information, where
the first operation includes at least one of the following:
   determining a paging cause;
   determining to request to avoid a paging collision or to request mobile registration;
   sending an indication indicating refusal to accept paging; and
   the first operation includes at least one of the following:
      determining a paging cause;
      determining to request to avoid a paging collision or to request mobile registration;
      sending an indication indicating refusal to accept paging; and
      presenting, through a man-machine interface, a supported paging cause value indicated by the first indication information, and a paging cause value supported by a terminal and/or a network, where
      the first indication information is used to indicate at least one of the following: indication information related to a paging cause, indication information related to an indication indicating refusal to accept paging, indication information related to avoidance of a paging collision, indication information related to a first leaving mode, and indication information related to a multi-card enhancement function;
      the network capability information includes at least one of the following: network capability information related to a paging cause, network capability information related to an indication indicating refusal to accept paging, network capability information related to avoidance of a paging collision, network capability information of a first leaving mode, and network capability information of a multi-card enhancement function; and
      the terminal capability information includes at least one of the following: terminal capability information related to a paging cause, terminal capability information related to an indication indicating refusal to accept paging, terminal capability information related to avoidance of a paging collision, terminal capability information of a first leaving mode, and terminal capability information of a multi-card enhancement function.

In an optional embodiment of this application, the terminal capability information related to the paging cause and/or the network capability information related to the paging cause include/includes at least one of the following and/or the indication information related to the paging cause is used to indicate at least one of the following:
that a paging cause function is supported or not supported;
a supported paging cause value and/or an unsupported paging cause value;
indication information for indicating that a first value is supported or not supported;
that a paging cause function via 3rd Generation Partnership Project 3GPP access is supported or not supported;
that a paging cause function via non-3GPP access is supported or not supported;
that a paging cause value via 3GPP access is supported and/or a paging cause value via 3GPP access is not supported; and
that a paging cause value via non-3GPP access is supported and/or a paging cause value via non-3GPP access is not supported;
   and/or
the terminal capability information related to the indication indicating refusal to accept paging and/or the network capability information related to the indication indicating refusal to accept paging include/includes at least one of the following and/or the indication information related to the indication indicating refusal to accept paging is used to indicate at least one of the following:
   that a function of indicating refusal to accept paging is supported or not supported;
   that a function of indicating refusal to paging via a 3GPP access node is supported or not supported;
   that a function of indicating refusal to paging via a non-3GPP access node is supported or not supported;
   that refusal of a first message and/or a paging cause via a non-3GPP access node by an indication indicating refusal to accept paging via a non-3GPP access node is supported or not supported;
   that refusal of a first message and/or a paging cause via a 3GPP access node by an indication indicating refusal to accept paging via a non-3GPP access node is supported or not supported;
   that refusal of a first message and/or a paging cause via a non-3GPP access node by an indication indicating refusal to accept paging via a 3GPP access node is supported or not supported; and
   that refusal of a first message and/or a paging cause via an AS by an indication indicating refusal to accept paging via an NAS is supported or not supported;
      and/or
   the terminal capability information related to avoidance of the paging collision and/or the network capability information related to avoidance of the paging collision include/includes and/or the indication information related to avoidance of the paging collision is used to indicate that avoidance of the paging collision is supported or not supported;
      and/or
   the terminal capability information of the multi-card enhancement function and/or the network capability information of the multi-card enhancement function include/includes and/or the indication information related to the multi-card enhancement function is used to indicate that the multi-card enhancement function is supported or not supported.

In an optional embodiment of this application, the first execution module 802 is further configured to: in a case that a first condition is satisfied, determine that the paging cause value is a first value or determining that the paging cause is a cause other than the paging cause value supported by the terminal and/or the network, where
the first condition includes at least one of the following:
that the first indication information indicates that a paging cause function is supported;
that the terminal supports and/or the network supports a paging cause function;
that the message for paging a terminal does not include a paging cause or includes a paging cause value not recognized by the terminal; and
that the terminal and/or the network do/does not support the first value, where
the first value includes one of the following: others indicating a paging cause other than the paging cause value supported by the terminal and/or the network or a paging cause other than a first paging cause value supported by the terminal and/or the network; non-voice; and default; and the first paging cause value does not include the first value.

In an optional embodiment of this application, the first execution module 802 is further configured to: in a case that a second condition is satisfied, request an operation of avoiding a paging collision, where
the second condition includes at least one of the following:
that the first indication information indicates that a paging collision avoidance function is supported;
that the terminal supports and/or the network supports a paging collision avoidance function;
that a paging collision occurs or a paging collision is expected to occur; and
that the terminal is in a multi-card mode;
   or
in a case that a third condition is satisfied, requesting an operation of mobile registration, where
the third condition includes at least one of the following:
   that the terminal supports avoidance of a paging collision;
   that the network does not support avoidance of a paging collision;
   that a paging collision occurs or a paging collision is expected to occur; and
   that the terminal is in a multi-card mode.

In an optional embodiment of this application, the first execution module 802 is further configured to: in a case that a third condition is satisfied, request an operation of mobile registration, where
the third condition includes at least one of the following:
that the terminal supports avoidance of a paging collision;
that the network does not support avoidance of a paging collision;
that a paging collision occurs or a paging collision is expected to occur; and
that the terminal is in a multi-card mode.

In an optional embodiment of this application, the first execution module 802 is further configured to: in a case that a fourth condition is satisfied, send the indication indicating refusal to accept paging, where
the fourth condition includes at least one of the following:
that the first indication information indicates that a paging cause function is supported;
that the terminal supports and/or the network supports a paging cause function;
that the first indication information indicates that a function of indicating refusal to accept paging is supported;
that the terminal supports and/or the network supports a function of indicating refusal to accept paging;
that the message for paging a terminal carries a paging cause; and
that the terminal is in a multi-card mode;
   and/or
in a case that a tenth condition is satisfied, sending an indication indicating refusal to accept paging of an NAS or refusing a first message and/or a paging cause of an AS by an indication indicating refusal to accept paging of an NAS, where
the tenth condition includes at least one of the following:
   that the first message and/or the paging cause of the AS are/is received;
   that a terminal identifier included in the first message of the AS is a terminal identifier of the terminal in an inactive state;
   that the terminal is in an idle state; and
   that the terminal refuses acceptance of the first message and/or the paging cause.

In an optional embodiment of this application, the sending an indication indicating refusal to accept paging includes at least one of the following:
sending the indication indicating refusal to accept paging via a 3GPP access node;
sending the indication indicating refusal to accept paging via a 3GPP access node;
sending the indication indicating refusal to accept paging via a non-3GPP access node;
sending the indication indicating refusal to accept paging via a non-3GPP access node, and refusing a first message and/or a paging cause received via a non-3GPP access node;
sending the indication indicating refusal to accept paging via a non-3GPP access node, and refusing a first message and/or a paging cause received via a 3GPP access node;
sending the indication indicating refusal to accept paging via a 3GPP access node, and refusing a first message and/or a paging cause received via a non-3GPP access node; and
refusing a first message and/or a paging cause of an AS by an indication indicating refusal to accept paging of an NAS.

In an optional embodiment of this application, the sending the indication indicating refusal to accept paging via a 3GPP access node includes:
in a case that a fifth condition is satisfied, sending the indication indicating refusal to accept paging via the 3GPP access node, where the fifth condition includes at least one of the following:
that the first indication information indicates that a function of indicating refusal to accept paging is supported;
that the terminal supports and/or the network supports a function of indicating refusal to accept paging;
that the first indication information indicates that a function of indicating refusal to paging via a 3GPP access node is supported;
that the terminal supports and/or the network supports a function of indicating refusal to paging via a 3GPP access node;
that the first indication information indicates that refusal of a first message and/or a paging cause via a non-3GPP access node by sending of an indication indicating refusal to accept paging via a 3GPP access node is supported;
that the terminal supports and/or the network supports refusal of a first message and/or a paging cause via a non-3GPP access node by sending of an indication indicating refusal to accept paging via a 3GPP access node; and
that the terminal is in a multi-card mode;
   and/or
the sending the indication indicating refusal to accept paging via a non-3GPP access node includes:
   in a case that a sixth condition is satisfied, sending the indication indicating refusal to accept paging via the non-3GPP access node, where the sixth condition includes at least one of the following:
   that the first indication information indicates that a function of indicating refusal to accept paging is supported;
   that the terminal supports and/or the network supports a function of indicating refusal to accept paging;
   that the first indication information indicates that a function of indicating refusal to paging via a non-3GPP access node is supported;
   that the terminal supports and/or the network supports a function of indicating refusal to paging via a non-3GPP access node;
   that the first indication information indicates that refusal of a first message and/or a paging cause via a non-3GPP access node by an indication indicating refusal to accept paging via a non-3GPP access node is supported;
   that the terminal supports and/or the network supports refusal of a first message and/or a paging cause via a non-3GPP access node by an indication indicating refusal to accept paging via a non-3GPP access node;
   that the first indication information indicates that refusal of a first message and/or a paging cause via a 3GPP access node by an indication indicating refusal to accept paging via a non-3GPP access node is supported;
   that the terminal supports and/or the network supports refusal of a first message and/or a paging cause via a 3GPP access node by an indication indicating refusal to accept paging via a non-3GPP access node; and
   that the terminal is in a multi-card mode;
      and/or
   the sending the indication indicating refusal to accept paging via a non-3GPP access node includes:
      in a case that a seventh condition is satisfied, refusing, by the indication indicating refusal to accept paging via the non-3GPP access node, the first message and/or the paging cause received via the non-3GPP access node, where
      the seventh condition includes at least one of the following: that the first indication information indicates that refusal of a first message and/or a paging cause via a non-3GPP access node by paging acceptance refusal via a non-3GPP access node is supported; that the terminal supports and/or the network supports refusal of a first message and/or a paging cause via a non-3GPP access node by paging acceptance refusal via a non-3GPP access node; and that the terminal is in a multi-card mode;
         and/or
      the sending the indication indicating refusal to accept paging via a non-3GPP access node includes:
         in a case that an eighth condition is satisfied, refusing, by the indication indicating refusal to accept paging via the non-3GPP access node, the first message and/or the paging cause received via the 3GPP access node, where
         the eighth condition includes at least one of the following: that the first indication information indicates that refusal of a first message and/or a paging cause via a 3GPP access node by paging acceptance refusal via a non-3GPP access node is supported; that the terminal supports and/or the network supports refusal of a first message and/or a paging cause via a 3GPP access node by paging acceptance refusal via a non-3GPP access node; and that the terminal is in a multi-card mode;
            and/or
         the sending the indication indicating refusal to accept paging via a 3GPP access node includes:
            in a case that a ninth condition is satisfied, refusing, by the indication indicating refusal to accept paging via the 3GPP access node, the first message and/or the paging cause received via the non-3GPP access node, where
            the ninth condition includes at least one of the following: that the first indication information indicates that refusal of a first message and/or a paging cause via a non-3GPP access node by an indication indicating refusal to accept paging via a 3GPP access node is supported; that the terminal supports and/or the network supports refusal of a first message and/or a paging cause via a non-3GPP access node by an indication indicating refusal to accept paging via a 3GPP access node; and that the terminal is in a multi-card mode.

The refusing a first message and/or a paging cause of an AS by an indication indicating refusal to accept paging of an NAS includes:
in a case that an eleventh condition is satisfied, sending the indication indicating refusal to accept paging of the NAS, where
the eleventh condition includes at least one of the following:
   that the first message and/or the paging cause of the AS are/is received;
   that a terminal identifier included in the first message of the AS is an identifier of the terminal in an inactive state;
   that the terminal is in an idle state; and
   that acceptance of the first message and/or the paging cause is refused.

In an optional embodiment of this application, the apparatus further includes a first sending module, configured to send the terminal capability information before the step of obtaining first information.

The apparatus provided in this embodiment of this application can implement the processes implemented in the method embodiment shown in FIG. 2 and achieve a same technical effect. To avoid repetition, details are not described herein again.

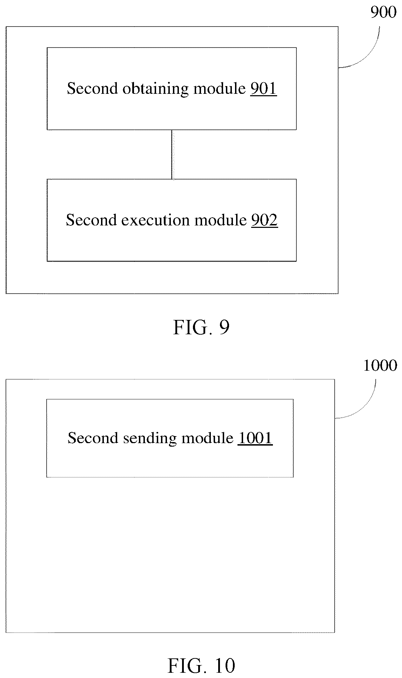

Referring to FIG. 9, an embodiment of this application provides an information processing apparatus, and the apparatus 900 includes:
a second obtaining module 901, configured to obtain second information, where the second information includes at least one of the following: terminal capability information and/or network capability information; and
a second execution module 902, configured to perform a second operation based on the second information, where
the second operation includes at least one of the following:
   sending a paging cause or not sending a paging cause;
   determining a paging cause value;
   determining first indication information;
   sending a paging cause via a non-3GPP access node or sending a paging cause via a notification message;
   sending a paging cause and/or a first message via a 3GPP access node, and receiving an indication indicating refusal to accept paging via a non-3GPP node;
   sending a paging cause and/or a first message via a non-3GPP access node, and receiving an indication indicating refusal to accept paging via a non-3GPP node; and
   sending a paging cause and/or a first message via a non-3GPP access node, and receiving an indication indicating refusal to accept paging via a 3GPP node;
   where the first indication information is used to indicate at least one of the following: indication information related to a paging cause, indication information related to an indication indicating refusal to accept paging, indication information related to avoidance of a paging collision, indication information related to a first leaving mode, and indication information related to a multi-card enhancement function;
   the terminal capability information includes at least one of the following: terminal capability information related to a paging cause, terminal capability information related to an indication indicating refusal to accept paging, terminal capability information related to avoidance of a paging collision, terminal capability information of a first leaving mode, and terminal capability information of a multi-card enhancement function;
   the network capability information includes at least one of the following: network capability information related to a paging cause, network capability information related to an indication indicating refusal to accept paging, network capability information related to avoidance of a paging collision, network capability information of a first leaving mode, and network capability information of a multi-card enhancement function; and
   the first message includes a message for paging a terminal.

In an optional embodiment of this application, the terminal capability information related to the paging cause and/or the network capability information related to the paging cause include/includes at least one of the following and/or the indication information related to the paging cause is used to indicate at least one of the following:
that a paging cause function is supported or not supported;
a supported paging cause value and/or an unsupported paging cause value;
indication information for indicating that a first value is supported or not supported;
that a paging cause function via 3GPP access is supported or not supported;
that a paging cause function via non-3GPP access is supported or not supported;
that a paging cause value via 3GPP access is supported and/or a paging cause value via 3GPP access is not supported; and
that a paging cause value via non-3GPP access is supported and/or a paging cause value via non-3GPP access is not supported;
   and/or
the indication information related to the indication indicating refusal to accept paging is used to indicate at least one of the following:
   that a function of indicating refusal to accept paging is supported or not supported;
   that a function of indicating refusal to paging via a 3GPP access node is supported or not supported;
   that a function of indicating refusal to paging via a non-3GPP access node is supported or not supported;
   that refusal of a first message and/or a paging cause via a non-3GPP access node by an indication indicating refusal to accept paging via a non-3GPP access node is supported or not supported;
   that refusal of a first message and/or a paging cause via a 3GPP access node by an indication indicating refusal to accept paging via a non-3GPP access node is supported or not supported; and
   that refusal of a first message and/or a paging cause via a non-3GPP access node by an indication indicating refusal to accept paging via a 3GPP access node is supported or not supported;
      and/or
   the terminal capability information related to avoidance of the paging collision and/or the network capability information related to avoidance of the paging collision include/includes and/or the indication information related to avoidance of the paging collision is used to indicate that avoidance of the paging collision is supported or not supported;
      and/or
   the terminal capability information related to the multi-card enhancement function and/or the network capability information related to the multi-card enhancement function include/includes and/or the indication information related to the multi-card enhancement function is used to indicate that the multi-card enhancement function is supported or not supported.

In an optional embodiment of this application, the performing a second operation based on the second information includes:
in a case that a first condition is satisfied, determining that the paging cause value is a paging cause value corresponding to first information and/or first data, where
the first condition includes at least one of the following:
   that first information and/or first data arrive/arrives;
   that the terminal supports a paging cause value corresponding to the first information and/or the first data;
   that the network supports or is capable of obtaining the paging cause value corresponding to the first information and/or the first data; and
   that the first information and/or the first data include/includes a voice, or the paging cause value corresponding to the first information and/or the first data includes a voice;
      or
   in a case that a second condition is satisfied, determining that the paging cause value is a first value, where
   the second condition includes at least one of the following:
      that the second information and/or second data arrive/arrives;
      that the terminal does not support a paging cause value corresponding to the second information and/or the second data;
      that the network does not support or is not capable of obtaining the paging cause value corresponding to the second information and/or the second data;
      that the terminal and/or the network support/supports the first value;
      that information and/or data about the terminal arrive/arrives and the information and/or the data about the terminal do/does not include data and/or information corresponding to a first paging cause value supported by the terminal and/or the network, where the first paging cause value is a paging cause value other than the first value; and
      that information and/or data about the terminal arrive/arrives and the information and/or the data about the terminal are/is non-voice or include/includes non-voice, where
      the first value includes one of the following: others indicating a paging cause other than the paging cause value supported by the terminal and/or the network or a paging cause other than a first paging cause value supported by the terminal and/or the network; non-voice; and default; and the first paging cause value does not include the first value.

In an optional embodiment of this application, the performing a second operation based on the second information includes:
in a case that a third condition is satisfied, sending a paging cause or indication information that is related to a paging cause and that indicates that a paging cause function is supported, where
the third condition includes at least one of the following:
   that the terminal supports a paging cause function;
   that the network supports a paging cause function;
   that the terminal supports a function of indicating refusal to accept paging;
   that the network supports a function of indicating refusal to accept paging;
   that the terminal supports a first leaving mode;
   that first information and/or first data arrive/arrives;
   that the terminal supports a paging cause value corresponding to the first information and/or the first data;
   that the network supports or is capable of obtaining the paging cause value corresponding to the first information and/or the first data;
   that the terminal is in a multi-card mode; and
   that information and/or data about the terminal arrive/arrives and the information and/or the data about the terminal include/includes data and/or information corresponding to the paging cause value supported by the terminal and/or the network;
      and/or
   in a case that a fourth condition is satisfied, not sending a paging cause or indication information that is related to a paging cause and that indicates that a paging cause function is not supported, where
   the fourth condition includes at least one of the following:
      that the terminal and/or the network do/does not support a paging cause function;
      that a RAN network element does not support a paging cause function;
      that the terminal does not support a function of indicating refusal to accept paging;
      that the network does not support a function of indicating refusal to accept paging;
      that the terminal does not support a first leaving mode;
      that the terminal is not in a multi-card mode;
      that the second information and/or second data arrive/arrives;
      that the terminal does not support a paging cause value corresponding to the second information and/or the second data;
      that the network does not support or is not capable of obtaining the paging cause value corresponding to the second information and/or the second data;
      that information and/or data about the terminal arrive/arrives and the information and/or the data about the terminal do/does not include data and/or information corresponding to the paging cause value supported by the terminal and/or the network;
      that the second information and/or the second data about the terminal is non-voice; and
      that the terminal and/or the network do/does not support a first value.

In an optional embodiment of this application, the performing a second operation based on the second information includes:
in a case that a fifth condition is satisfied, sending a paging cause via non-3GPP access or sending a paging cause via a notification message, where
the fifth condition includes at least one of the following:
   that the terminal and/or the network support/supports a paging cause function via non-3GPP access;
   that the network supports a function of sending a paging cause via a notification message; and
   that the terminal supports a function of receiving a paging cause via a notification message.

In an optional embodiment of this application, the performing a second operation based on the second information includes:
in a case that a sixth condition is satisfied, determining that the first indication information indicates that a first function is supported, where
the sixth condition includes: that the terminal and the network support the first function; and
the first function includes at least one of the following: a paging cause function, a function of indicating refusal to accept paging, a paging collision avoidance function, and a function of a first leaving mode.

In an optional embodiment of this application, the apparatus further includes:
a requesting module, configured to request terminal capability information and/or network capability information of a radio access network RAN network element from the RAN network element.

In an optional embodiment of this application, the terminal capability information related to the paging cause includes at least one of the following: terminal radio capability information related to the paging cause and terminal core network capability information related to the paging cause;
the terminal capability information related to the indication indicating refusal to accept paging includes at least one of the following: terminal radio capability information related to the indication indicating refusal to accept paging and terminal core network capability information related to the indication indicating refusal to accept paging;
the terminal capability information related to avoidance of the paging collision includes at least one of the following: terminal radio capability information related to avoidance of the paging collision and terminal core network capability information related to avoidance of the paging collision;
the terminal capability information related to the first leaving mode includes at least one of the following: terminal radio capability information related to the first leaving mode and terminal core network capability information related to the first leaving mode; and
the terminal capability information related to the multi-card enhancement function includes at least one of the following: terminal radio capability information related to the multi-card enhancement function and terminal core network capability information related to the multi-card enhancement function.

The apparatus provided in this embodiment of this application can implement the processes implemented in the method embodiment shown in FIG. 3 and achieve a same technical effect. To avoid repetition, details are not described herein again.

Referring to FIG. 10, an embodiment of this application provides an information processing apparatus, and the apparatus 1000 includes:
a second sending module 1001, configured to send terminal capability information, where the terminal capability information includes at least one of the following: terminal capability information related to a paging cause, terminal capability information related to an indication indicating refusal to accept paging, terminal capability information related to avoidance of a paging collision, terminal capability information of a first leaving mode, and terminal capability information of a multi-card enhancement function.

In an optional embodiment of this application, the terminal capability information related to the paging cause includes at least one of the following:
that a paging cause function is supported or not supported;
a supported paging cause value and/or an unsupported paging cause value;
that a paging cause function via 3GPP access is supported or not supported;
that a paging cause function via non-3GPP access is supported or not supported;
that a paging cause value via 3GPP access is supported and/or a paging cause value via 3GPP access is not supported; and
that a paging cause value via non-3GPP access is supported and/or a paging cause value via non-3GPP access is not supported;
   and/or
the terminal capability information related to the indication indicating refusal to accept paging includes at least one of the following:
   that a function of indicating refusal to accept paging is supported or not supported;
   that a function of indicating refusal to paging via a 3GPP access node is supported or not supported;
   that a function of indicating refusal to paging via a non-3GPP access node is supported or not supported;
   that refusal of a first message and/or a paging cause via a non-3GPP access node by an indication indicating refusal to accept paging via a non-3GPP access node is supported or not supported;
   that refusal of a first message and/or a paging cause via a 3GPP access node by an indication indicating refusal to accept paging via a non-3GPP access node is supported or not supported; and
   that refusal of a first message and/or a paging cause via a non-3GPP access node by an indication indicating refusal to accept paging via a 3GPP access node is supported or not supported;
      and/or
   the terminal capability information related to avoidance of the paging collision includes:
      that avoidance of a paging collision is supported or not supported;
         and/or
      the terminal capability information related to the multi-card enhancement function includes:
         that a multi-card enhancement function is supported or not supported.

In an optional embodiment of this application, the terminal capability information related to the paging cause includes at least one of the following: terminal radio capability information related to the paging cause and terminal core network capability information related to the paging cause;
the terminal capability information related to the indication indicating refusal to accept paging includes at least one of the following: terminal radio capability information related to the indication indicating refusal to accept paging and terminal core network capability information related to the indication indicating refusal to accept paging;
the terminal capability information related to avoidance of the paging collision includes at least one of the following: terminal radio capability information related to avoidance of the paging collision and terminal core network capability information related to avoidance of the paging collision;
the terminal capability information related to the first leaving mode includes at least one of the following: terminal radio capability information related to the first leaving mode and terminal core network capability information related to the first leaving mode; and
the terminal capability information related to the multi-card enhancement function includes at least one of the following: terminal radio capability information related to the multi-card enhancement function and terminal core network capability information related to the multi-card enhancement function, where
the terminal radio capability information related to the paging cause and/or the terminal core network capability information related to the paging cause include/includes at least one of the following:
   that a paging cause function is supported or not supported;
   a supported paging cause value and/or an unsupported paging cause value;
   that a paging cause function via 3GPP access is supported or not supported;
   that a paging cause function via non-3GPP access is supported or not supported;
   that a paging cause value via 3GPP access is supported and/or a paging cause value via 3GPP access is not supported; and
   that a paging cause value via non-3GPP access is supported and/or a paging cause value via non-3GPP access is not supported;
      and/or
   the terminal radio capability information related to the indication indicating refusal to accept paging and the terminal core network capability information related to the indication indicating refusal to accept paging include/includes at least one of the following:
      that a function of indicating refusal to accept paging is supported or not supported;
      that a function of indicating refusal to paging via a 3GPP access node is supported or not supported;
      that a function of indicating refusal to paging via a non-3GPP access node is supported or not supported;
      that refusal of a first message and/or a paging cause via a non-3GPP access node by an indication indicating refusal to accept paging via a non-3GPP access node is supported or not supported;
      that refusal of a first message and/or a paging cause via a 3GPP access node by an indication indicating refusal to accept paging via a non-3GPP access node is supported or not supported; and
      that refusal of a first message and/or a paging cause via a non-3GPP access node by an indication indicating refusal to accept paging via a 3GPP access node is supported or not supported;
      the terminal radio capability information related to avoidance of the paging collision and/or the terminal core network capability information related to avoidance of the paging collision includes: that avoidance of a paging collision is supported or not supported;
         and/or
      the terminal radio capability information related to the multi-card enhancement function and/or the terminal core network capability information related to the multi-card enhancement function includes: that a multi-card enhancement function is supported or not supported.

In an optional embodiment of this application, the apparatus further includes a third obtaining module, configured to obtain first request information before the step of sending terminal capability information, where the first request information is used to request the terminal capability information.

The apparatus provided in this embodiment of this application can implement the processes implemented in the method embodiment shown in FIG. 4 and achieve a same technical effect. To avoid repetition, details are not described herein again.

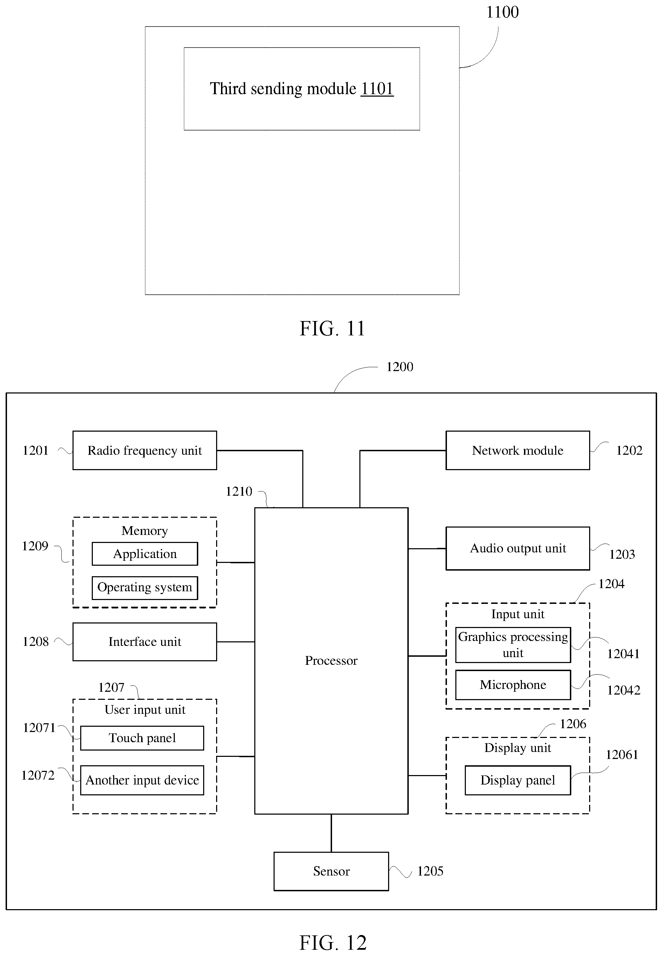

Referring to FIG. 11, an embodiment of this application provides an information processing apparatus, and the apparatus 1100 includes:
a third sending module 1101, configured to send network capability information and/or first indication information, where
the first indication information is used to indicate at least one of the following: indication information related to a paging cause, indication information related to an indication indicating refusal to accept paging, indication information related to avoidance of a paging collision, indication information related to a first leaving mode, and indication information related to a multi-card enhancement function; and
the network capability information includes at least one of the following: network capability information related to a paging cause, network capability information related to an indication indicating refusal to accept paging, network capability information related to avoidance of a paging collision, network capability information of a first leaving mode, and network capability information of a multi-card enhancement function.

In an optional embodiment of this application, the network capability information is network capability information of a RAN network element.

The apparatus provided in this embodiment of this application can implement the processes implemented in the method embodiment shown in FIG. 5 and achieve a same technical effect. To avoid repetition, details are not described herein again.

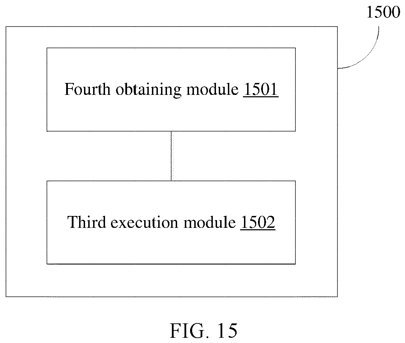

Referring to FIG. 15, an embodiment of this application provides an information processing apparatus, and the apparatus 1500 includes:
a fourth obtaining module 1501, configured to obtain fifth information, where the fifth information includes at least one of the following: indication information for indicating to send a paging cause, first indication information, and indication information for indicating that a terminal is in a multi-card mode; and
a third execution module 1502, configured to perform a fifth operation based on the fifth information, where
the fifth operation includes at least one of the following:
   determining a paging cause; and
   sending a paging cause.

In an optional embodiment of this application, the operation of determining a paging cause value includes: determining the paging cause value based on a DSCP value in a data packet; and
the operation of sending a paging cause includes including the determined paging cause value in a first message.

In an optional embodiment of this application, the sending a paging cause includes: sending the paging cause in a case that a twelfth condition is satisfied, where
the twelfth condition includes at least one of the following:
that the determined paging cause value is a voice;
that the determined paging cause value is a paging cause value supported by the terminal and/or a network;
that the first indication information indicates that a paging cause function is supported;
that the terminal and/or a RAN network element support/supports a paging cause function; and
that the terminal and/or the network support/supports a paging cause function.

The apparatus provided in this embodiment of this application can implement the processes implemented in the method embodiment shown in FIG. 14 and achieve a same technical effect. To avoid repetition, details are not described herein again.

FIG. 12 is a schematic diagram of a hardware structure of a terminal according to an embodiment of this application. A terminal 1200 includes but is not limited to components such as a radio frequency unit 1201, a network module 1202, an audio output unit 1203, an input unit 1204, a sensor 1205, a display unit 1206, a user input unit 1207, an interface unit 1208, a memory 1209, and a processor 1210.

A person skilled in the art can understand that the terminal 1200 may further include a power supply (such as a battery) that supplies power to each component. The power supply may be logically connected to the processor 1210 by using a power supply management system, to implement functions such as charging and discharging management, and power consumption management by using the power supply management system. The terminal structure shown in FIG. 12 constitutes no limitation on the terminal, and the terminal may include more or fewer components than those shown in the figure, or combine some components, or have different component arrangements. Details are not described herein.

It should be understood that, in this embodiment of this application, the input unit 1204 may include a graphics processing unit (Graphics Processing Unit, GPU) 12041 and a microphone 12042, and the graphics processing unit 12041 processes image data of a still picture or a video obtained by an image capture apparatus (such as a camera) in a video capture mode or an image capture mode. The display unit 1206 may include a display panel 12061. Optionally, the display panel 12061 may be configured in a form such as a liquid crystal display or an organic light-emitting diode. The user input unit 1207 includes a touch panel 120121 and another input device 12072. The touch panel 120121 is also referred to as a touchscreen. The touch panel 120121 may include two parts: a touch detection apparatus and a touch controller. The another input device 12072 may include but is not limited to a physical keyboard, a functional button (such as a volume control button or a power on/off button), a trackball, a mouse, and a joystick. Details are not described herein.

In this embodiment of this application, the radio frequency unit 1201 receives downlink data from a network side device and then sends the downlink data to the processor 1210 for processing; and sends uplink data to the network side device. Usually, the radio frequency unit 1201 includes but is not limited to an antenna, at least one amplifier, a transceiver, a coupler, a low noise amplifier, a duplexer, and the like.

The memory 1209 may be configured to store a software program or an instruction and various data. The memory 1209 may mainly include a program or instruction storage area and a data storage area. The program or instruction storage area may store an operating system, and an application or an instruction required by at least one function (for example, a sound playing function or an image playing function). In addition, the memory 1209 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-volatile solid-state storage component.

The processor 1210 may include one or more processing units. Optionally, an application processor and a modem processor may be integrated into the processor 1210. The application processor mainly processes an operating system, a user interface, an application, an instruction, or the like. The modem processor mainly processes wireless communication, for example, a baseband processor. It can be understood that, alternatively, the modem processor may not be integrated into the processor 1210.

The terminal provided in this embodiment of this application can implement the processes implemented in the method embodiment in FIG. 2 or FIG. 4 and achieve a same technical effect. To avoid repetition, details are not described herein again.

An embodiment of this application further provides a network side device. As shown in FIG. 13, a network side device 1300 includes an antenna 1301, a radio frequency apparatus 1302, and a baseband apparatus 1303. The antenna 1301 is connected to the radio frequency apparatus 1302. In an uplink direction, the radio frequency apparatus 1302 receives information by using the antenna 1301, and sends the received information to the baseband apparatus 1303 for processing. In a downlink direction, the baseband apparatus 1303 processes to-be-sent information, and sends the information to the radio frequency apparatus 1302. The radio frequency apparatus 1302 processes the received information and then sends the information by using the antenna 1301.

The frequency band processing apparatus may be located in the baseband apparatus 1303. The method performed by the network side device in the foregoing embodiment may be implemented in the baseband apparatus 1303. The baseband apparatus 1303 includes a processor 1304 and a memory 1305.

The baseband apparatus 1303 may include, for example, at least one baseband board, where a plurality of chips are disposed on the baseband board. As shown in FIG. 13, one chip is, for example, the processor 1304, which is connected to the memory 1305, so as to invoke a program in the memory 1305 to perform operations of the network device shown in the foregoing method embodiment.

The baseband apparatus 1303 may further include a network interface 1306, configured to exchange information with the radio frequency apparatus 1302. For example, the interface is a common public radio interface (Common Public Radio Interface, CPRI).

Specifically, the network side device in this embodiment of this application further includes an instruction or a program stored in the memory 1305 and executable on the processor 1304. The processor 1304 invokes the instruction or the program in the memory 1305 to perform the method performed by the modules shown in FIG. 9 to FIG. 11, and a same technical effect is achieved. To avoid repetition, details are not described herein again.

An embodiment of this application further provides a computer program product. The computer program product is stored in a non-transitory readable storage medium, and the computer program product is executed by at least one processor to implement the processes of the foregoing method embodiment shown in FIG. 2 to FIG. 5 and a same technical effect can be achieved. To avoid repetition, details are not described herein again.

An embodiment of this application further provides a readable storage medium. The readable storage medium may be non-volatile or volatile. The readable storage medium stores a program or an instruction, and when the program or the instruction is executed by a processor, the processes of the foregoing method embodiment shown in FIG. 2 to FIG. 5 are implemented and a same technical effect can be achieved. To avoid repetition, details are not described herein again.

The processor is a processor in the terminal in the foregoing embodiment. The readable storage medium includes a computer-readable storage medium, such as a computer read-only memory (Read-only Memory, ROM), a random access memory (Random Access Memory, RAM), a magnetic disk, or an optical disc.

An embodiment of this application further provides a chip. The chip includes a processor and a communication interface, the communication interface is coupled to the processor, and the processor is configured to execute a program or an instruction of a network side device to implement the processes of the foregoing method embodiment shown in FIG. 2 to FIG. 5 and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. An information processing method, wherein the method is performed by a first communication device and comprises:
obtaining first information, wherein the first information comprises at least one of the following: a message for paging a terminal, terminal capability information, network capability information, and first indication information; and
performing a first operation based on the first information, wherein
the first operation comprises at least one of the following:
determining a paging cause;
determining to request to avoid a paging collision or to request mobile registration;
sending an indication indicating refusal to accept paging; and
presenting, through a man-machine interface, a supported paging cause value indicated by the first indication information, and a paging cause value supported by a terminal and/or a network; wherein
the first indication information is used to indicate at least one of the following: indication information related to a paging cause, indication information related to an indication of refusal to accept paging, indication information related to avoidance of a paging collision, indication information related to a first leaving mode, and indication information related to a multi-card enhancement function;
the network capability information comprises at least one of the following: network capability information related to a paging cause, network capability information related to an indication indicating refusal to accept paging, network capability information related to avoidance of a paging collision, network capability information of a first leaving mode, and network capability information of a multi-card enhancement function; and
the terminal capability information comprises at least one of the following: terminal capability information related to a paging cause, terminal capability information related to an indication indicating refusal to accept paging, terminal capability information related to avoidance of a paging collision, terminal capability information of a first leaving mode, and terminal capability information of a multi-card enhancement function.

2. The method according to claim 1, wherein
the terminal capability information related to the paging cause and/or the network capability information related to the paging cause comprise/comprises at least one of the following and/or the indication information related to the paging cause is used to indicate at least one of the following:
that a paging cause function is supported or not supported;
a supported paging cause value and/or an unsupported paging cause value;
indication information for indicating that a first value is supported or not supported;
that a paging cause function via 3rd Generation Partnership Project 3GPP access is supported or not supported;
that a paging cause function via non-3GPP access is supported or not supported;
that a paging cause value via 3GPP access is supported and/or a paging cause value via 3GPP access is not supported; and
that a paging cause value via non-3GPP access is supported and/or a paging cause value via non-3GPP access is not supported;
and/or
the terminal capability information related to the indication indicating refusal to accept paging and/or the network capability information related to the indication indicating refusal to accept paging comprise/comprises at least one of the following and/or the indication information related to the indication indicating refusal to accept paging is used to indicate at least one of the following:
that a function of indicating refusal to accept paging is supported or not supported;
that a function of indicating refusal to paging via a 3GPP access node is supported or not supported;
that a function of indicating refusal to paging via a non-3GPP access node is supported or not supported;
that refusal of a first message and/or a paging cause via a non-3GPP access node by an indication indicating refusal to accept paging via a non-3GPP access node is supported or not supported;
that refusal of a first message and/or a paging cause via a 3GPP access node by an indication indicating refusal to accept paging via a non-3GPP access node is supported or not supported;
that refusal of a first message and/or a paging cause via a non-3GPP access node by an indication indicating refusal to accept paging via a 3GPP access node is supported or not supported; and
that refusal of a first message and/or a paging cause via an access stratum AS by an indication indicating refusal to accept paging via a non-access stratum NAS is supported or not supported;
and/or
the terminal capability information related to avoidance of the paging collision and/or the network capability information related to avoidance of the paging collision comprise/comprises and/or the indication information related to avoidance of the paging collision is used to indicate that avoidance of the paging collision is supported or not supported;
and/or
the terminal capability information of the multi-card enhancement function and/or the network capability information of the multi-card enhancement function comprise/comprises and/or the indication information related to the multi-card enhancement function is used to indicate that the multi-card enhancement function is supported or not supported.

3. The method according to claim 1, wherein the performing a first operation based on the first information comprises:
in a case that a first condition is satisfied, determining that the paging cause value is a first value or determining that the paging cause is a cause other than the paging cause value supported by the terminal and/or the network, wherein
the first condition comprises at least one of the following:
that the first indication information indicates that a paging cause function is supported;
that the terminal supports and/or the network supports a paging cause function;
that the message for paging a terminal does not comprise a paging cause or comprises a paging cause value not recognized by the terminal; and
that the terminal and/or the network do/does not support the first value, wherein
the first value comprises one of the following: others indicating a paging cause other than the paging cause value supported by the terminal and/or the network or a paging cause other than a first paging cause value supported by the terminal and/or the network; non-voice; and default; and the first paging cause value does not comprise the first value.

4. The method according to claim 1, wherein the performing a first operation based on the first information comprises:
in a case that a second condition is satisfied, requesting an operation of avoiding a paging collision, wherein
the second condition comprises at least one of the following:
that the first indication information indicates that a paging collision avoidance function is supported;
that the terminal supports and/or the network supports a paging collision avoidance function;
that a paging collision occurs or a paging collision is expected to occur; and
that the terminal is in a multi-card mode;
or
in a case that a third condition is satisfied, requesting an operation of mobile registration, wherein
the third condition comprises at least one of the following:
that the terminal supports avoidance of a paging collision;
that the network does not support avoidance of a paging collision;
that a paging collision occurs or a paging collision is expected to occur; and
that the terminal is in a multi-card mode.

5. The method according to claim 1, wherein the performing a first operation based on the first information comprises:
in a case that a fourth condition is satisfied, sending the indication indicating refusal to accept paging, wherein
the fourth condition comprises at least one of the following:
that the first indication information indicates that a paging cause function is supported;
that the terminal supports and/or the network supports a paging cause function;
that the first indication information indicates that a function of indicating refusal to accept paging is supported;
that the terminal supports and/or the network supports a function of indicating refusal to accept paging;
that the message for paging a terminal carries a paging cause; and
that the terminal is in a multi-card mode;
and/or
in a case that a tenth condition is satisfied, sending an indication indicating refusal to accept paging of an NAS or refusing a first message and/or a paging cause of an AS by an indication indicating refusal to accept paging of an NAS, wherein
the tenth condition comprises at least one of the following:
that the first message and/or the paging cause of the AS are/is received;
that a terminal identifier comprised in the first message of the AS is a terminal identifier of the terminal in an inactive state;
that the terminal is in an idle state; and
that the terminal refuses acceptance of the first message and/or the paging cause.

6. The method according to claim 1, wherein the sending an indication indicating refusal to accept paging comprises at least one of the following:
sending the indication indicating refusal to accept paging via a 3GPP access node;
sending the indication indicating refusal to accept paging via a non-3GPP access node;
sending the indication indicating refusal to accept paging via a non-3GPP access node, and refusing a first message and/or a paging cause received via a non-3GPP access node;
sending the indication indicating refusal to accept paging via a non-3GPP access node, and refusing a first message and/or a paging cause received via a 3GPP access node;
sending the indication indicating refusal to accept paging via a 3GPP access node, and refusing a first message and/or a paging cause received via a non-3GPP access node; and
refusing a first message and/or a paging cause of an AS by an indication indicating refusal to accept paging of an NAS.

7. The method according to claim 6, wherein
the sending the indication indicating refusal to accept paging via a 3GPP access node comprises:
in a case that a fifth condition is satisfied, sending the indication indicating refusal to accept paging via the 3GPP access node, wherein the fifth condition comprises at least one of the following:
that the first indication information indicates that a function of indicating refusal to accept paging is supported;
that the terminal supports and/or the network supports a function of indicating refusal to accept paging;
that the first indication information indicates that a function of indicating refusal to paging via a 3GPP access node is supported;
that the terminal supports and/or the network supports a function of indicating refusal to paging via a 3GPP access node;
that the first indication information indicates that refusal of a first message and/or a paging cause via a non-3GPP access node by sending of an indication indicating refusal to accept paging via a 3GPP access node is supported;
that the terminal supports and/or the network supports refusal of a first message and/or a paging cause via a non-3GPP access node by sending of an indication indicating refusal to accept paging via a 3GPP access node; and
that the terminal is in a multi-card mode;
and/or
the sending the indication indicating refusal to accept paging via a non-3GPP access node comprises:
in a case that a sixth condition is satisfied, sending the indication indicating refusal to accept paging via the non-3GPP access node, wherein the sixth condition comprises at least one of the following:
that the first indication information indicates that a function of indicating refusal to accept paging is supported;
that the terminal supports and/or the network supports a function of indicating refusal to accept paging;
that the first indication information indicates that a function of indicating refusal to paging via a non-3GPP access node is supported;
that the terminal supports and/or the network supports a function of indicating refusal to paging via a non-3GPP access node;
that the first indication information indicates that refusal of a first message and/or a paging cause via a non-3GPP access node by an indication indicating refusal to accept paging via a non-3GPP access node is supported;
that the terminal supports and/or the network supports refusal of a first message and/or a paging cause via a non-3GPP access node by an indication indicating refusal to accept paging via a non-3GPP access node;
that the first indication information indicates that refusal of a first message and/or a paging cause via a 3GPP access node by an indication indicating refusal to accept paging via a non-3GPP access node is supported;
that the terminal supports and/or the network supports refusal of a first message and/or a paging cause via a 3GPP access node by an indication indicating refusal to accept paging via a non-3GPP access node; and
that the terminal is in a multi-card mode;
and/or
the sending the indication indicating refusal to accept paging via a non-3GPP access node comprises:
in a case that a seventh condition is satisfied, refusing, by the indication indicating refusal to accept paging via the non-3GPP access node, the first message and/or the paging cause received via the non-3GPP access node, wherein
the seventh condition comprises at least one of the following: that the first indication information indicates that refusal of a first message and/or a paging cause via a non-3GPP access node by paging acceptance refusal via a non-3GPP access node is supported; that the terminal supports and/or the network supports refusal of a first message and/or a paging cause via a non-3GPP access node by paging acceptance refusal via a non-3GPP access node; and that the terminal is in a multi-card mode;
and/or
the sending the indication indicating refusal to accept paging via a non-3GPP access node comprises:
in a case that an eighth condition is satisfied, refusing, by the indication indicating refusal to accept paging via the non-3GPP access node, the first message and/or the paging cause received via the 3GPP access node, wherein
the eighth condition comprises at least one of the following: that the first indication information indicates that refusal of a first message and/or a paging cause via a 3GPP access node by paging acceptance refusal via a non-3GPP access node is supported; that the terminal supports and/or the network supports refusal of a first message and/or a paging cause via a 3GPP access node by paging acceptance refusal via a non-3GPP access node; and that the terminal is in a multi-card mode;
and/or
the sending the indication indicating refusal to accept paging via a 3GPP access node comprises:
in a case that a ninth condition is satisfied, refusing, by the indication indicating refusal to accept paging via the 3GPP access node, the first message and/or the paging cause received via the non-3GPP access node, wherein
the ninth condition comprises at least one of the following: that the first indication information indicates that refusal of a first message and/or a paging cause via a non-3GPP access node by an indication indicating refusal to accept paging via a 3GPP access node is supported; that the terminal supports and/or the network supports refusal of a first message and/or a paging cause via a non-3GPP access node by an indication indicating refusal to accept paging via a 3GPP access node; and that the terminal is in a multi-card mode.

8. The method according to claim 6, wherein the refusing a first message and/or a paging cause of an AS by an indication indicating refusal to accept paging of an NAS comprises:
in a case that an eleventh condition is satisfied, sending the indication indicating refusal to accept paging of the NAS, wherein
the eleventh condition comprises at least one of the following:
that the first message and/or the paging cause of the AS are/is received;
that a terminal identifier comprised in the first message of the AS is an identifier of the terminal in an inactive state;
that the terminal is in an idle state; and
that acceptance of the first message and/or the paging cause is refused.

9. The method according to claim 1, wherein before the step of obtaining first information, the method further comprises:
sending the terminal capability information.

10. An information processing method, wherein the method is performed by a second communication device and comprises:
obtaining second information, wherein the second information comprises at least one of the following: terminal capability information and/or network capability information; and
performing a second operation based on the second information, wherein
the second operation comprises at least one of the following:
sending a paging cause or not sending a paging cause;
determining a paging cause value;
determining first indication information;
sending a paging cause via a non-3GPP access node or sending a paging cause via a notification message;
sending a paging cause and/or a first message via a 3GPP access node, and receiving an indication indicating refusal to accept paging via a non-3GPP node;
sending a paging cause and/or a first message via a non-3GPP access node, and receiving an indication indicating refusal to accept paging via a non-3GPP node; and
sending a paging cause and/or a first message via a non-3GPP access node, and receiving an indication indicating refusal to accept paging via a 3GPP node;
wherein the first indication information is used to indicate at least one of the following: indication information related to a paging cause, indication information related to an indication indicating refusal to accept paging, indication information related to avoidance of a paging collision, indication information related to a first leaving mode, and indication information related to a multi-card enhancement function;
the terminal capability information comprises at least one of the following: terminal capability information related to a paging cause, terminal capability information related to an indication indicating refusal to accept paging, terminal capability information related to avoidance of a paging collision, terminal capability information of a first leaving mode, and terminal capability information of a multi-card enhancement function;
the network capability information comprises at least one of the following: network capability information related to a paging cause, network capability information related to an indication indicating refusal to accept paging, network capability information related to avoidance of a paging collision, network capability information of a first leaving mode, and network capability information of a multi-card enhancement function; and
the first message comprises a message for paging a terminal.

11. The method according to claim 10, wherein
the terminal capability information related to the paging cause and/or the network capability information related to the paging cause comprise/comprises at least one of the following and/or the indication information related to the paging cause is used to indicate at least one of the following:
that a paging cause function is supported or not supported;
a supported paging cause value and/or an unsupported paging cause value;
indication information for indicating that a first value is supported or not supported;
that a paging cause function via 3GPP access is supported or not supported;
that a paging cause function via non-3GPP access is supported or not supported;
that a paging cause value via 3GPP access is supported and/or a paging cause value via 3GPP access is not supported; and
that a paging cause value via non-3GPP access is supported and/or a paging cause value via non-3GPP access is not supported;
and/or
the indication information related to the indication indicating refusal to accept paging is used to indicate at least one of the following:
that a function of indicating refusal to accept paging is supported or not supported;
that a function of indicating refusal to paging via a 3GPP access node is supported or not supported;
that a function of indicating refusal to paging via a non-3GPP access node is supported or not supported;
that refusal of a first message and/or a paging cause via a non-3GPP access node by an indication indicating refusal to accept paging via a non-3GPP access node is supported or not supported;
that refusal of a first message and/or a paging cause via a 3GPP access node by an indication indicating refusal to accept paging via a non-3GPP access node is supported or not supported; and
that refusal of a first message and/or a paging cause via a non-3GPP access node by an indication indicating refusal to accept paging via a 3GPP access node is supported or not supported;
and/or
the terminal capability information related to avoidance of the paging collision and/or the network capability information related to avoidance of the paging collision comprise/comprises and/or the indication information related to avoidance of the paging collision is used to indicate that avoidance of the paging collision is supported or not supported;
and/or
the terminal capability information related to the multi-card enhancement function and/or the network capability information related to the multi-card enhancement function comprise/comprises and/or the indication information related to the multi-card enhancement function is used to indicate that the multi-card enhancement function is supported or not supported.

12. The method according to claim 10, wherein the performing a second operation based on the second information comprises:
in a case that a first condition is satisfied, determining that the paging cause value is a paging cause value corresponding to first information and/or first data, wherein
the first condition comprises at least one of the following:
that the first information and/or the first data arrive/arrives;
that the terminal supports a paging cause value corresponding to the first information and/or the first data;
that the network supports or is capable of obtaining the paging cause value corresponding to the first information and/or the first data; and
that the first information and/or the first data comprise/comprises a voice, or the paging cause value corresponding to the first information and/or the first data comprises a voice;
or
in a case that a second condition is satisfied, determining that the paging cause value is a first value, wherein
the second condition comprises at least one of the following:
that the second information and/or second data arrive/arrives;
that the terminal does not support a paging cause value corresponding to the second information and/or the second data;
that the network does not support or is not capable of obtaining the paging cause value corresponding to the second information and/or the second data;
that the terminal and/or the network support/supports the first value;
that information and/or data about the terminal arrive/arrives and the information and/or the data about the terminal do/does not comprise data and/or information corresponding to a first paging cause value supported by the terminal and/or the network, wherein the first paging cause value is a paging cause value other than the first value; and
that information and/or data about the terminal arrive/arrives and the information and/or the data about the terminal are/is non-voice or comprise/comprises non-voice, wherein
the first value comprises one of the following: others indicating a paging cause other than the paging cause value supported by the terminal and/or the network or a paging cause other than a first paging cause value supported by the terminal and/or the network; non-voice; and default; and the first paging cause value does not comprise the first value.

13. The method according to claim 10, wherein the performing a second operation based on the second information comprises:
in a case that a third condition is satisfied, sending a paging cause or indication information that is related to a paging cause and that indicates that a paging cause function is supported, wherein
the third condition comprises at least one of the following:
that the terminal supports a paging cause function;
that the network supports a paging cause function;
that the terminal supports a function of indicating refusal to accept paging;
that the network supports a function of indicating refusal to accept paging;
that the terminal supports a first leaving mode;
that first information and/or first data arrive/arrives;
that the terminal supports a paging cause value corresponding to the first information and/or the first data;
that the network supports or is capable of obtaining the paging cause value corresponding to the first information and/or the first data;
that the terminal is in a multi-card mode; and
that information and/or data about the terminal arrive/arrives and the information and/or the data about the terminal comprise/comprises data and/or information corresponding to the paging cause value supported by the terminal and/or the network;
and/or
in a case that a fourth condition is satisfied, not sending a paging cause or indication information that is related to a paging cause and that indicates that a paging cause function is not supported, wherein
the fourth condition comprises at least one of the following:
that the terminal and/or the network do/does not support a paging cause function;
that a radio access network RAN network element does not support a paging cause function;
that the terminal does not support a function of indicating refusal to accept paging;
that the network does not support a function of indicating refusal to accept paging;
that the terminal does not support a first leaving mode;
that the terminal is not in a multi-card mode;
that the second information and/or second data arrive/arrives;
that the terminal does not support a paging cause value corresponding to the second information and/or the second data;
that the network does not support or is not capable of obtaining the paging cause value corresponding to the second information and/or the second data;
that information and/or data about the terminal arrive/arrives and the information and/or the data about the terminal do/does not comprise data and/or information corresponding to the paging cause value supported by the terminal and/or the network;
that the second information and/or the second data about the terminal is non-voice; and
that the terminal and/or the network do/does not support a first value.

14. The method according to claim 10, wherein the performing a second operation based on the second information comprises:
in a case that a fifth condition is satisfied, sending a paging cause via non-3GPP access or sending a paging cause via a notification message, wherein
the fifth condition comprises at least one of the following:
that the terminal and/or the network support/supports a paging cause function via non-3GPP access;
that the network supports a function of sending a paging cause via a notification message; and
that the terminal supports a function of receiving a paging cause via a notification message.

15. The method according to claim 10, wherein the performing a second operation based on the second information comprises:
in a case that a sixth condition is satisfied, determining that the first indication information indicates that a first function is supported, wherein
the sixth condition comprises: that the terminal and the network support the first function; and
the first function comprises at least one of the following: a paging cause function, a function of indicating refusal to accept paging, a paging collision avoidance function, and a function of a first leaving mode.

16. The method according to claim 10, wherein before the obtaining a terminal capability, the method further comprises:
requesting the terminal capability information and/or network capability information of a radio access network RAN network element from the RAN network element.

17. The method according to claim 10, wherein
the terminal capability information related to the paging cause comprises at least one of the following: terminal radio capability information related to the paging cause and terminal core network capability information related to the paging cause;
the terminal capability information related to the indication indicating refusal to accept paging comprises at least one of the following: terminal radio capability information related to the indication indicating refusal to accept paging and terminal core network capability information related to the indication indicating refusal to accept paging;
the terminal capability information related to avoidance of the paging collision comprises at least one of the following: terminal radio capability information related to avoidance of the paging collision and terminal core network capability information related to avoidance of the paging collision;
the terminal capability information related to the first leaving mode comprises at least one of the following: terminal radio capability information related to the first leaving mode and terminal core network capability information related to the first leaving mode; and
the terminal capability information related to the multi-card enhancement function comprises at least one of the following: terminal radio capability information related to the multi-card enhancement function and terminal core network capability information related to the multi-card enhancement function.

18. An information processing method, wherein the method is performed by a third communication device and comprises:
sending terminal capability information, wherein the terminal capability information comprises at least one of the following: terminal capability information related to a paging cause, terminal capability information related to an indication indicating refusal to accept paging, terminal capability information related to avoidance of a paging collision, terminal capability information of a first leaving mode, and terminal capability information of a multi-card enhancement function.

19. The method according to claim 18, wherein
the terminal capability information related to the paging cause comprises at least one of the following:
that a paging cause function is supported or not supported;
a supported paging cause value and/or an unsupported paging cause value;
that a paging cause function via 3GPP access is supported or not supported;
that a paging cause function via non-3GPP access is supported or not supported;
that a paging cause value via 3GPP access is supported and/or a paging cause value via 3GPP access is not supported; and
that a paging cause value via non-3GPP access is supported and/or a paging cause value via non-3GPP access is not supported;
and/or
the terminal capability information related to the indication indicating refusal to accept paging comprises at least one of the following:
that a function of indicating refusal to accept paging is supported or not supported;
that a function of indicating refusal to paging via a 3GPP access node is supported or not supported;
that a function of indicating refusal to paging via a non-3GPP access node is supported or not supported;
that refusal of a first message and/or a paging cause via a non-3GPP access node by an indication indicating refusal to accept paging via a non-3GPP access node is supported or not supported;
that refusal of a first message and/or a paging cause via a 3GPP access node by an indication indicating refusal to accept paging via a non-3GPP access node is supported or not supported; and
that refusal of a first message and/or a paging cause via a non-3GPP access node by an indication indicating refusal to accept paging via a 3GPP access node is supported or not supported;
and/or
the terminal capability information related to avoidance of the paging collision comprises:
that avoidance of a paging collision is supported or not supported;
and/or
the terminal capability information related to the multi-card enhancement function comprises:
that a multi-card enhancement function is supported or not supported.

20. The method according to claim 18, wherein
the terminal capability information related to the paging cause comprises at least one of the following: terminal radio capability information related to the paging cause and terminal core network capability information related to the paging cause;
the terminal capability information related to the indication indicating refusal to accept paging comprises at least one of the following: terminal radio capability information related to the indication indicating refusal to accept paging and terminal core network capability information related to the indication indicating refusal to accept paging;
the terminal capability information related to avoidance of the paging collision comprises at least one of the following: terminal radio capability information related to avoidance of the paging collision and terminal core network capability information related to avoidance of the paging collision;
the terminal capability information related to the first leaving mode comprises at least one of the following: terminal radio capability information related to the first leaving mode and terminal core network capability information related to the first leaving mode; and
the terminal capability information related to the multi-card enhancement function comprises at least one of the following: terminal radio capability information related to the multi-card enhancement function and terminal core network capability information related to the multi-card enhancement function, wherein
the terminal radio capability information related to the paging cause and/or the terminal core network capability information related to the paging cause comprise/comprises at least one of the following:
that a paging cause function is supported or not supported;
a supported paging cause value and/or an unsupported paging cause value;
that a paging cause function via 3GPP access is supported or not supported;
that a paging cause function via non-3GPP access is supported or not supported;
that a paging cause value via 3GPP access is supported and/or a paging cause value via 3GPP access is not supported; and
that a paging cause value via non-3GPP access is supported and/or a paging cause value via non-3GPP access is not supported;
and/or
the terminal radio capability information related to the indication indicating refusal to accept paging and the terminal core network capability information related to the indication indicating refusal to accept paging comprise/comprises at least one of the following:
that a function of indicating refusal to accept paging is supported or not supported;
that a function of indicating refusal to paging via a 3GPP access node is supported or not supported;
that a function of indicating refusal to paging via a non-3GPP access node is supported or not supported;
that refusal of a first message and/or a paging cause via a non-3GPP access node by an indication indicating refusal to accept paging via a non-3GPP access node is supported or not supported;
that refusal of a first message and/or a paging cause via a 3GPP access node by an indication indicating refusal to accept paging via a non-3GPP access node is supported or not supported; and
that refusal of a first message and/or a paging cause via a non-3GPP access node by an indication indicating refusal to accept paging via a 3GPP access node is supported or not supported;
the terminal radio capability information related to avoidance of the paging collision and/or the terminal core network capability information related to avoidance of the paging collision comprises: that avoidance of a paging collision is supported or not supported;
and/or
the terminal radio capability information related to the multi-card enhancement function and/or the terminal core network capability information related to the multi-card enhancement function comprises: that a multi-card enhancement function is supported or not supported.

21. The method according to claim 18, wherein before the step of sending terminal capability information, the method further comprises:
obtaining first request information, wherein the first request information is used to request the terminal capability information.

22. An information processing method, wherein the method is performed by a fourth communication device and comprises:
sending network capability information and/or first indication information, wherein
the first indication information is used to indicate at least one of the following: indication information related to a paging cause, indication information related to an indication indicating refusal to accept paging, indication information related to avoidance of a paging collision, indication information related to a first leaving mode, and indication information related to a multi-card enhancement function; and
the network capability information comprises at least one of the following: network capability information related to a paging cause, network capability information related to an indication indicating refusal to accept paging, network capability information related to avoidance of a paging collision, network capability information of a first leaving mode, and network capability information of a multi-card enhancement function.

23. The method according to claim 22, wherein the network capability information is network capability information of a RAN network element.

24. An information processing method, wherein the method is performed by a fifth communication device and comprises:
obtaining fifth information, wherein the fifth information comprises at least one of the following: indication information for indicating to send a paging cause, first indication information, and indication information for indicating that a terminal is in a multi-card mode; and
performing a fifth operation based on the fifth information, wherein
the fifth operation comprises at least one of the following:
determining a paging cause; and
sending a paging cause.

25. The method according to claim 24, wherein
an operation of determining a paging cause value comprises: determining the paging cause value based on a DSCP value in a data packet; and
an operation of sending a paging cause comprises: comprising determined paging cause value in a first message.

26. The method according to claim 24, wherein the sending a paging cause comprises:
sending the paging cause in a case that a twelfth condition is satisfied, wherein
the twelfth condition comprises at least one of the following:
that the determined paging cause value is a voice;
that the determined paging cause value is a paging cause value supported by the terminal and/or a network;
that the first indication information indicates that a paging cause function is supported;
that the terminal and/or a RAN network element support/supports a paging cause function; and
that the terminal and/or the network support/supports a paging cause function.

27. An information processing apparatus, comprising:
a first obtaining module, configured to obtain first information, wherein the first information comprises at least one of the following: a message for paging a terminal, terminal capability information, network capability information, and first indication information; and
a first execution module, configured to perform a first operation based on the first information, wherein
the first operation comprises at least one of the following:
determining a paging cause;
determining to request to avoid a paging collision or to request mobile registration;
sending an indication indicating refusal to accept paging; and
presenting, through a man-machine interface, a supported paging cause value indicated by the first indication information, and a paging cause value supported by a terminal and/or a network; wherein
the first indication information is used to indicate at least one of the following: indication information related to a paging cause, indication information related to an indication indicating refusal to accept paging, indication information related to avoidance of a paging collision, indication information related to a first leaving mode, and indication information related to a multi-card enhancement function;
the network capability information comprises at least one of the following: network capability information related to a paging cause, network capability information related to an indication indicating refusal to accept paging, network capability information related to avoidance of a paging collision, network capability information of a first leaving mode, and network capability information of a multi-card enhancement function; and
the terminal capability information comprises at least one of the following: terminal capability information related to a paging cause, terminal capability information related to an indication indicating refusal to accept paging, terminal capability information related to avoidance of a paging collision, terminal capability information of a first leaving mode, and terminal capability information of a multi-card enhancement function.

28. An information processing apparatus, comprising:
a second obtaining module, configured to obtain second information, wherein the second information comprises at least one of the following: terminal capability information and/or network capability information; and
a second execution module, configured to perform a second operation based on the second information, wherein
the second operation comprises at least one of the following:
sending a paging cause or not sending a paging cause;
determining a paging cause value;
determining first indication information;
sending a paging cause via a non-3GPP access node or sending a paging cause via a notification message;
sending a paging cause and/or a first message via a 3GPP access node, and receiving an indication indicating refusal to accept paging via a non-3GPP node;
sending a paging cause and/or a first message via a non-3GPP access node, and receiving an indication indicating refusal to accept paging via a non-3GPP node; and
sending a paging cause and/or a first message via a non-3GPP access node, and receiving an indication indicating refusal to accept paging via a 3GPP node;
wherein the first indication information is used to indicate at least one of the following: indication information related to a paging cause, indication information related to an indication indicating refusal to accept paging, indication information related to avoidance of a paging collision, indication information related to a first leaving mode, and indication information related to a multi-card enhancement function;
the terminal capability information comprises at least one of the following: terminal capability information related to a paging cause, terminal capability information related to an indication indicating refusal to accept paging, terminal capability information related to avoidance of a paging collision, terminal capability information of a first leaving mode, and terminal capability information of a multi-card enhancement function;
the network capability information comprises at least one of the following: network capability information related to a paging cause, network capability information related to an indication indicating refusal to accept paging, network capability information related to avoidance of a paging collision, network capability information of a first leaving mode, and network capability information of a multi-card enhancement function; and
the first message comprises a message for paging a terminal.

29. An information processing apparatus, comprising:
a second sending module, configured to send terminal capability information, wherein the terminal capability information comprises at least one of the following: terminal capability information related to a paging cause, terminal capability information related to an indication indicating refusal to accept paging, terminal capability information related to avoidance of a paging collision, terminal capability information of a first leaving mode, and terminal capability information of a multi-card enhancement function.

30. An information processing apparatus, comprising:
a third sending module, configured to send network capability information and/or first indication information, wherein
the first indication information is used to indicate at least one of the following: indication information related to a paging cause, indication information related to an indication indicating refusal to accept paging, indication information related to avoidance of a paging collision, indication information related to a first leaving mode, and indication information related to a multi-card enhancement function; and
the network capability information comprises at least one of the following: network capability information related to a paging cause, network capability information related to an indication indicating refusal to accept paging, network capability information related to avoidance of a paging collision, network capability information of a first leaving mode, and network capability information of a multi-card enhancement function.

31. An information processing apparatus, comprising:
a fourth obtaining module, configured to obtain fifth information, wherein the fifth information comprises at least one of the following: indication information for indicating to send a paging cause, first indication information, and indication information for indicating that a terminal is in a multi-card mode; and
a third execution module, configured to perform a fifth operation based on the fifth information, wherein
the fifth operation comprises at least one of the following:
determining a paging cause; and
sending a paging cause.

32. A terminal, comprising a processor, a memory, and a program stored in the memory and executable on the processor, wherein when the program is executed by the processor, the steps of the method according to any one of claims 1 to 9 or the steps of the method according to any one of claims 18 to 21 are implemented.

33. A network side device, comprising a processor, a memory, and a program stored in the memory and executable on the processor, wherein when the program is executed by the processor, the steps of the method according to any one of claims 10 to 17, or the steps of the method according to any one of claims 18 to 21, or the steps of the method according to claim 22 or 23, or the steps of the method according to any one of claims 24 to 26 are implemented.

34. A readable storage medium, wherein the readable storage medium stores a program or an instruction, and when the program or the instruction is executed by a processor, the steps of the method according to any one of claims 1 to 26 are implemented.

35. A chip, comprising a processor and a communication interface, wherein the communication interface is coupled to the processor, and the processor is configured to execute a program or an instruction to implement the steps of the method according to any one of claims 1 to 9, or the steps of the method according to any one of claims 10 to 17, or the steps of the method according to any one of claims 18 to 21, or the steps of the method according to claim 22 or 23, or the steps of the method according to any one of claims 24 to 26.

36. A computer program product, wherein the computer program product is stored in a non-transient readable storage medium, and the computer program product is executed by at least one processor to implement the steps of the method according to any one of claims 1 to 9, or the steps of the method according to any one of claims 10 to 17, or the steps of the method according to any one of claims 18 to 21, or the steps of the method according to claim 22 or 23, or the steps of the method according to any one of claims 24 to 26.

37. A communication device, configured to perform the steps of the method according to any one of claims 1 to 9, or the steps of the method according to any one of claims 10 to 17, or the steps of the method according to any one of claims 18 to 21, or the steps of the method according to claim 22 or 23, or the steps of the method according to any one of claims 24 to 26.
